# EUROPÄISCHE PATENTSCHRIFT

(11) **EP 0 849 307 B1**
(45) Veröffentlichungstag und Bekanntmachung des Hinweises auf die Patenterteilung: **17.03.1999**
(21) Anmeldenummer: 97121390.5
(22) Anmeldetag: 05.12.1997
(51) Int. Cl.: C08G 77/392, C08G 77/395, C08G 77/388, C07F 7/08

(54) **Ionische Organosiliciumverbindungen, deren Herstellung und Verwendung**
Ionic organosilicon compounds, their preparation and use
Composés organosiliciques, ioniques, leur préparation et leur utilisation

(30) Priorität: 10.12.1996 DE 19651287
(43) Veröffentlichungstag der Anmeldung: 24.06.1998
(73) Patentinhaber: Wacker-Chemie GmbH, 81737 München (DE)
(72) Erfinder: Hierstetter, Thomas, Dr., 84489 Burghausen (DE); Dauth, Jochen, Dr., 84489 Burghausen (DE); Peschanel, Birgit, 84489 Burghausen (DE); Deubzer, Bernward, Dr., 84489 Burghausen (DE)
(74) Vertreter: Deffner-Lehner, Maria, Dr.

(56) Entgegenhaltungen:
- EP-A- 0 095 156
- EP-A- 0 292 760
- EP-A- 0 423 696
- WO-A-95/18096
- WO-A-96/32436
- US-A- 3 779 912
- US-A- 4 525 567
- US-A- 5 405 983

## Beschreibung

Die Erfindung betrifft ionische Organosiliciumverbindungen, deren Herstellung und Verwendung.

Zwitterionische sulfonathaltige Siloxane werden nach M. Litt und T. Matsuda, J. Appl. Polym. Sci. **19** (1975) 1221, durch Umsetzung aminoalkylfunktioneller Silane/Siloxane mit ω-Alkyl-sultonen erhalten. ω-Alkylsultone sind zwar sehr reaktiv, aber in der Regel auch sehr toxisch und cancerogen. Eine Verwendung solcher Verbindungen ist nur in speziellen Anlagen mit hohen Sicherheitsauflagen möglich; ein Einsatz der nach diesem Verfahren erhaltenen zwitterionischen Siloxane ist aufgrund des Restgehalts an ω-Alkylsultonen sehr bedenklich und daher limitiert.

In US 5,532,399 (Wacker-Chemie GmbH, ausgegeben am 02.07.1996) werden ionische Siloxane dadurch hergestellt, daß erst über eine nucleophile Substitution durch Sulfitionen an Chlorpropylsilanen und einer gleichzeitigen Hydrolyse ein Sulfonatfunktionelles Siloxan-Hydrolysat erzeugt wird, aus dem durch Ansäuern ein Sulfonsäure-funktionelles Siloxan-Hydrolysat entsteht, welches sich letztendlich mit aminfunktionellen Silanen/Siloxanen und weiteren Siloxanen zu einem zwitterionischen, Ammonium- und Sulfonatgruppen tragenden Siloxan equilibrieren läßt.

Gegenstand der Erfindung sind ionische Organosiliciumverbindungen enthaltend Siloxaneinheiten der Formel

AₐR_{b}X_{c}SiO_{(4-a-b-c)/2} (I),

wobei R gleiche oder verschiedene, gegebenenfalls halogenierte Kohlenwasserstoffreste mit 1 bis 12 Kohlenstoffatomen oder Reste der Formeln

-R'-[[NHCH₂CH₂]ₒ-[N⁺H₂CH₂CH₂]ₚ-N^{(x+q-2)+}HₓR''_{q}]_{d-1} (II),

-R'-[SH]_{d-1} (III)

oder

-R'-[Z-C(O)-CR'''=CH₂]_{d-1} (IV)

bedeutet, worin
R' gleich oder verschieden sein kann und ein zwei-, drei- oder vierwertigen Kohlenwasserstoffrest mit 1 bis 60 Kohlenstoffatomen ist, der durch ein oder mehrere Sauerstoffatome unterbrochen sein kann,
R" ein Wasserstoffatom oder ein Alkylrest mit 1 bis 8 Kohlenstoffatomen ist,
Z ein Sauerstoffatom oder einen Rest der Formel -NR"'-darstellt,
R"' ein Wasserstoffatom oder einen Methylrest bedeutet,
o 0 oder eine ganze Zahl von 1 bis 100,
p 0 oder eine ganze Zahl von 1 bis 100,
q 0, 1 oder 2,
x 0, 1 oder 2 und
d abhängig von der Wertigkeit von Rest R' 2, 3 oder 4 ist, mit der Maßgabe, daß in Formel (II) die Summe x+q gleich 2 oder 3 ist,
X gleich oder verschieden sein kann und ein Halogenatom oder einen Rest der Formel -OR¹ bedeutet mit R¹ gleich Alkylrest, der durch ein Sauerstoffatom unterbrochen sein kann, oder einen Rest der Formel

   -R²-[[CH₂CH₂O]ₖ-[CH(CH₃)CH₂O]ₗ-[(CH₂)₄O]ₘ-R³]ₑ₋₁ (V)

   bedeutet, worin
R² ein zwei-, drei- oder vierwertigen Kohlenwasserstoffrest mit 1 bis 60 Kohlenstoffatomen ist, der durch ein oder mehrere Sauerstoffatome unterbrochen sein kann und durch eine oder mehrere Gruppen der Formeln 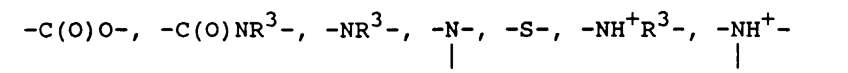 substituiert ist, worin
R³ ein Wasserstoffatom oder ein Kohlenwasserstoffrest mit 1 bis 30 Kohlenstoffatomen ist, der gegebenenfalls durch eine Gruppe der Formel -CO- unterbrochen sein kann,
k 0 oder eine ganze Zahl von 1 bis 100,
l 0 oder eine ganze Zahl von 1 bis 100,
m 0 oder eine ganze Zahl von 1 bis 100 ist und
e abhängig von der Wertigkeit von R² gleich 2, 3 oder 4 ist, mit der Maßgabe, daß die Summe aus k+l+m ≥ 1 ist,
und A ein Rest der Formel

-R⁴-B_{(f-1)} (VI)

ist, worin
R⁴ eine der für R² oben angegebenen Bedeutungen hat,
f abhängig von der Wertigkeit von R⁴ 2, 3 oder 4 ist und
B einen Rest ausgewählt aus der Gruppe der allgemeinen Formeln 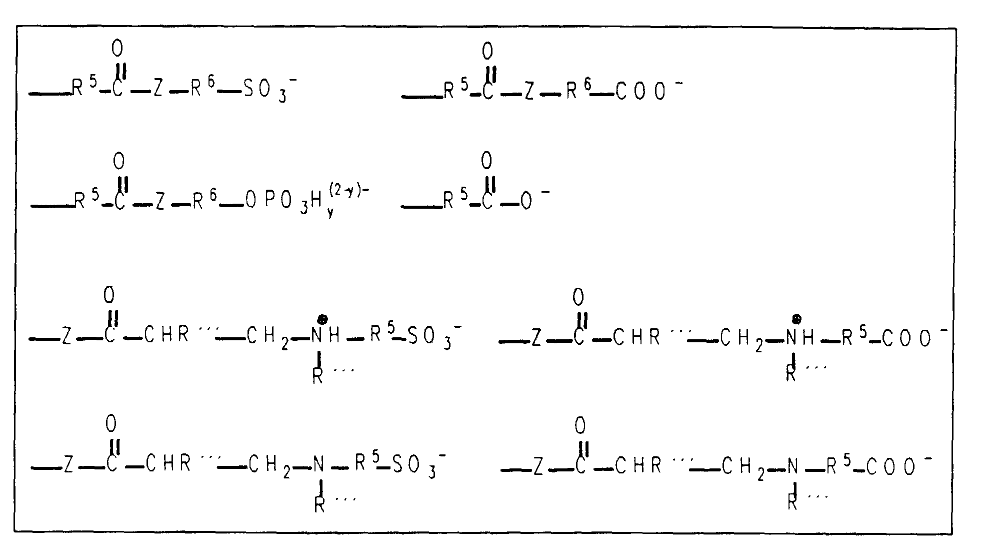 darstellt, worin
R⁵ gleich oder verschieden sein kann und einen zweiwertigen Kohlenwasserstoffrest mit 2 bis 18 Kohlenstoffatomen bedeutet,
R⁶ gleich oder verschieden sein kann und einen zweiwertigen Alkylenrest mit 1 bis 18 Kohlenwasserstoffatomen oder einen Rest aus der Gruppe der Formeln 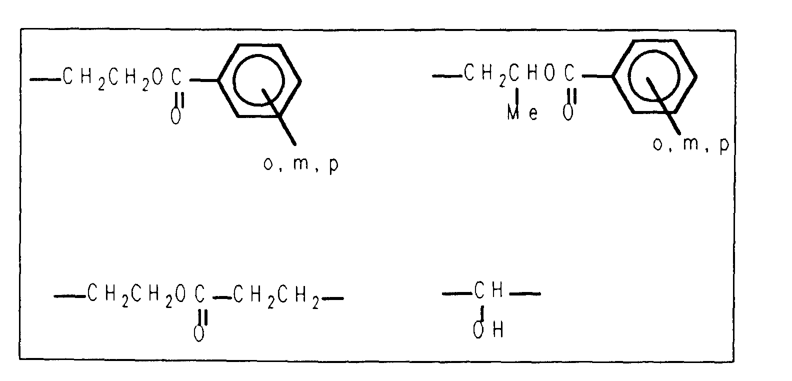 bedeutet mit Me gleich Methylrest,
Z und R''' jeweils eine der oben dafür angegebenen Bedeutungen haben und
y gleich 0 oder 1 ist,
a 0 oder 1 ist,
b 0, 1, 2 oder 3 ist,
c 0, 1, 2 oder 3 ist
und die Summe a+b+c ≤ 4 ist,
mit der Maßgabe, daß mindestens ein Rest A pro Molekül enthalten ist und gegebenenfalls zum Ausgleich der negativen Ladungen nicht gebundene Gegenionen aus der Gruppe der Alkali-, Erdalkali- oder Ammoniumionen organischer Amine sowie zum Ausgleich der positiven Ladungen nicht gebundene Gegenionen aus der Gruppe der organischen Anionen, wie z.B. Acetationen, vorhanden sind.

Vorzugsweise handelt es sich bei den erfindungsgemäßen Organosiliciumverbindungen um solche, die aus Einheiten der Formel (I) bestehen.

Bei den erfindungsgemäßen Organosiliciumverbindungen kann es sich um beliebige Organosiliciumverbindungen, wie z.B. Organosilane sowie lineare, verzweigte und cyclische Organosiloxane handeln, wobei Siloxane bevorzugt sind.

Beispiele für R sind Alkylreste, wie der Methyl-, Ethyl-, n-Propyl-, iso-Propyl-,1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Reste R' sind lineare oder verzweigte Alkylenreste, wie etwa der 1,2-Ethylen-, 1,3-Propylen-, 1,2-Propylen-, 1,3-(2-Methylpropylen)- und Dimethylmethylenrest oder durch Sauerstoffatome unterbrochene mehrwertige Kohlenwasserstoffreste wie etwa solche der Formel (VII) 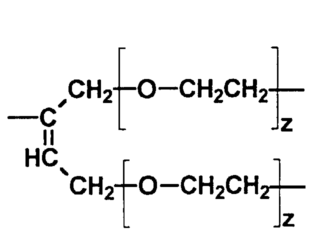 mit z = 0, 1, 2, 3, 4 oder 5, wobei der 1,3-Propylen-, 1,2-Propylenund 1,3-(2-Methylpropylen)-Rest sowie Reste der Formel (VII) bevorzugt und der 1,3-Propylenrest besonders bevorzugt sind.

Beispiele für Reste R" sind das Wasserstoffatom und die für R gleich Alkylrest mit 1 bis 8 Kohlenstoffatomen angegebenen Beispiele, wobei das Wasserstoffatom und der Methylrest bevorzugt und das Wasserstoffatom besonders bevorzugt sind.

Bevorzugt handelt es sich bei Rest R"' um Wasserstoffatom.

Bevorzugt ist o 0 oder eine ganze Zahl von 1 bis 30.

Bevorzugt ist p 0 oder eine ganze Zahl von 1 bis 30.

Bevorzugt ist x 1 oder 2.

Bevorzugt ist q 0 oder 1.

Beispiele für Reste R der Formeln (II) bis (IV) sind
-(CH₂)₃-NH_{2,} -(CH₂)₃-NHMe, -(CH₂)₃-NHCyclohexyl,
-(CH₂)₃-NH₃⁺, -(CH₂)₃-NH₂⁺Me, -(CH₂)₃-NH₂⁺Cyclohexyl
-(CH₂)₃-NHCH₂CH₂-NH₂, -(CH₂)₃-NHCH₂CH₂-NHMe,
-(CH₂)₃-NHCH₂CH₂-NHEt, -(CH₂)₃-NHCH₂CH₂-NHCyclohexyl,
-(CH₂)₃-NHCH₂CH₂-NEt₂, -(CH₂)₃-NHCH₂CH₂-NH₃⁺,
-(CH₂)₃-NHCH₂CH₂-NH₂⁺Me, -(CH₂)₃-NHCH₂CH₂-NH₂⁺Cyclohexyl
-(CH₂)₃-NHCH₂CH₂-NH₂⁺Et, -(CH₂)₃-NHCH₂CH₂-NH⁺Et₂,
-(CH₂)₃-NH₂⁺CH₂CH₂-NH_{2,} -(CH₂)₃-NH₂⁺CH₂CH₂-NHMe,
-(CH₂)₃-NH₂⁺CH₂CH₂-NHEt, -(CH₂)₃-NH₂⁺CH₂CH₂-NHCyclohexyl,
-(CH₂)₃-NH₂⁺CH₂CH₂-NEt₂, -(CH₂)₃-NH₂⁺CH₂CH₂-[NHCH₂CH₂]₂-NH_{2,}
-(CH₂)₃-NH₂⁺CH₂CH₂-[NHCH₂CH₂]₂-NHMe,
-(CH₂)₃-NH₂⁺CH₂CH₂-[NHCH₂CH₂]₂-NHCyclohexyl
-(CH₂)₃-NH-CO-CH=CH₂, -(CH₂)₃-NH-CO-CMe=CH₂
-(CH₂)₃-[NHCH₂CH₂]₃-NH-CO-CH=CH₂,
-(CH₂)₃-[NH₂⁺CH₂CH₂]₃-NH-CO-CH=CH₂, -(CH₂)₃-SH und 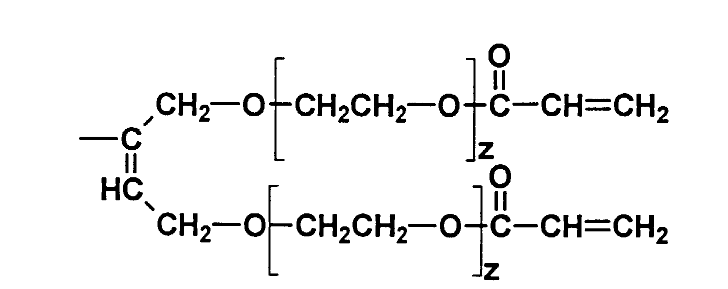 mit der für z oben angegebenen Bedeutung, wobei Me Methylrest und Et Ethylrest bedeutet.

Bevorzugt handelt es sich bei Rest R um den Methyl-, Ethyl-, Propyl-, Butyl-, Vinyl- und Cyclohexylrest oder um einen Rest der Formel -(CH₂)₃-NH₂, -(CH₂)₃-NHMe, -(CH₂)₃-NH₃⁺, -(CH₂)₃-NH₂⁺Me, -(CH₂)₃-NHCH₂CH₂-NH₂, -(CH₂)₃-NHCH₂CH₂-NH₃⁺, -(CH₂)₃-NH₂⁺CH₂CH₂-NH₂, -(CH₂)₃-NH₂⁺CH₂CH₂-NHMe, -(CH₂)₃-SH mit Me gleich Methylrest und der für z oben angegebenen Bedeutung.

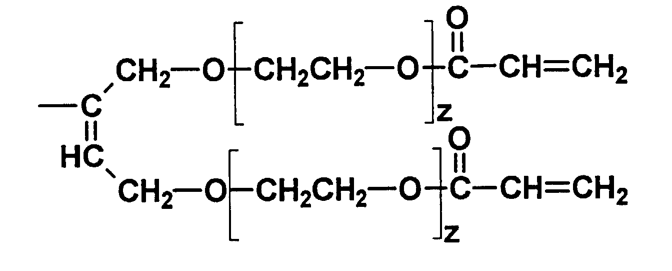

Besonders bevorzugt handelt es sich bei Rest R um den Methyl-, Ethyl-, Propyl-, Butyl-, Vinyl- oder Cyclohexylrest, insbesondere um den Methylrest.

Beispiele für Reste R¹ sind die für R gleich Alkylreste angegebenen Beispiele sowie der Methoxyethyl- und Ethoxyethylrest, wobei es sich bei Rest R¹ bevorzugt um Alkylreste mit 1 bis 4 Kohlenstoffatomen, die durch Sauerstoffatome unterbrochen sein können, besonders bevorzugt um den Methyl- und den Ethylrest handelt.

Beispiele für Reste R² sind
-(CH₂)₃-NHCH₂CH₂-COO-, -(CH₂)₃-N[CH₂CH₂-COO-]₂,
-(CH₂)₃-N-cyclohexyl-CH₂CH₂-COO-,
-(CH₂)₃-NHCH₂CH₂-NHCH₂CH₂-COO-, 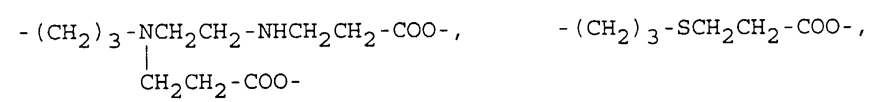 -(CH₂)₃-NHCH₂CH₂-COO-CH₂CH₂-,
-(CH₂)₃-N[CH₂CH₂-COO-CH₂CH₂-]₂,
-(CH₂)₃-N-cyclohexyl-CH₂CH₂-COO-CH₂CH₂-,
-(CH₂)₃-NHCH₂CH₂-NHCH₂CH₂-COO-CH₂CH₂-, 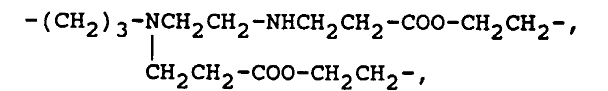 -(CH₂)₃-SCH₂CH₂-COO-CH₂CH₂-,
-(CH₂)₃-NH₂⁺CH₂CH₂-COO-, -(CH₂)₃-NH⁺ [CH₂CH₂-COO-]₂,
-(CH₂)₃-NH⁺-cyclohexyl-CH₂CH₂-COO-,
-(CH₂)₃-NHCH₂CH₂-NH₂⁺CH₂CH₂-COO-, 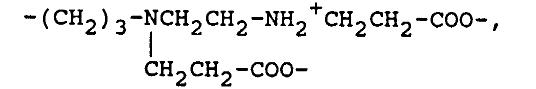 -(CH₂)₃-NH₂⁺CH₂CH₂-COO-CH₂CH₂-,
-(CH₂)₃-NH⁺[CH₂CH₂-COO-CH₂CH₂-]₂,
-(CH₂)₃-NH⁺-cyclohexyl-CH₂CH₂-COO-CH₂CH₂-,
-(CH₂)₃-NH₂⁺CH₂CH₂-NHCH₂CH₂-COO-CH₂CH₂-, 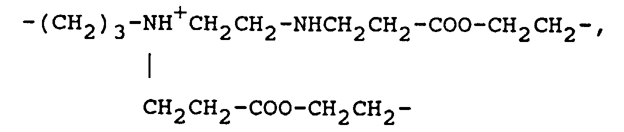 und 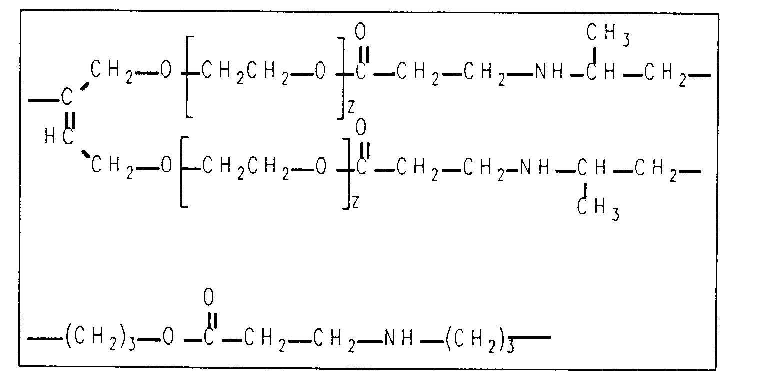 mit z gleich der obengenannten Bedeutung.

Bevorzugt handelt es sich bei Rest R² um
-(CH₂)₃-NHCH₂CH₂-COO-, -(CH₂)₃-N[CH₂CH₂-COO-]₂,
-(CH₂)₃-NHCH₂CH₂-NHCH₂CH₂-COO-, 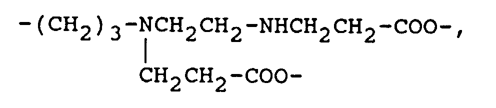 -(CH₂)₃-NHCH₂CH₂-COO-CH₂CH₂-,
-(CH₂)₃-N[CH₂CH₂-COO-CH₂CH₂-]₂
-(CH₂)₃-NHCH₂CH₂-NHCH₂CH₂-COO-CH₂CH₂-, 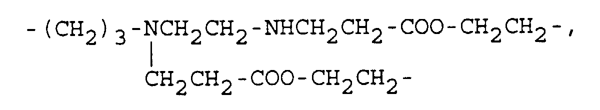 und 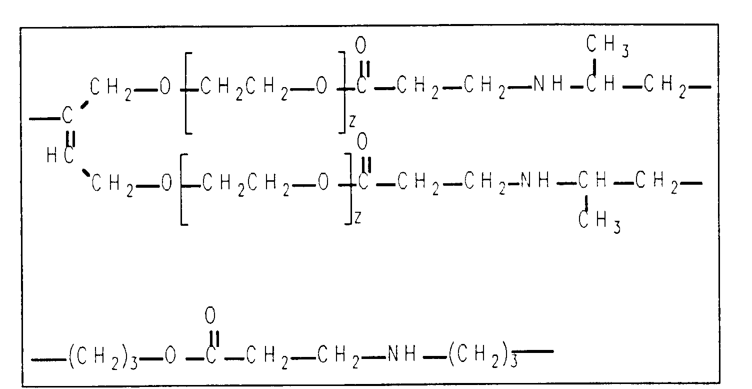 mit z gleich der obengenannten Bedeutung.

Beispiele für R³ sind die für R angegebenen Beispiele für Kohlenwasserstoffreste mit 1 bis 20 Kohlenstoffatomen sowie -CO-CH₃, -CO-CH₂-CH₃, -CO-Butyl.

Bevorzugt handelt es sich bei Rest R³ um ein Wasserstoffatom, eine Methyl- oder Butylgruppe.

Beispiele für X gleich Reste der Formel (V) sind
-(CH₂)₃-NH-CH₂-CH₂-CO-[OC₂H₄]₉OCH₃,
-(CH₂)₃-NH-CH₂-CH₂-CO-[OC₂H₄]₆OC₆H₅ und
-(CH₂)₃-NH-CH₂-CH₂-CO-[OC₂H₄]₁₆OC₆H₄-p-C₉H₁₉, wobei
-(CH₂)₃-NH-CH₂-CH₂-CO-[OC₂H₄]₉OCH₃ bevorzugt ist.

Bevorzugt liegt der Wert für k+l+m zwischen 2 und 30, besonders bevorzugt zwischen 4 und 20.

Falls X die Bedeutung von Halogenatom hat, handelt es sich bevorzugt um das Chloratom.

Bevorzugt handelt es sich bei X um den Rest -OR¹ mit R¹ gleich der obengenannten Bedeutung, wobei -OCH₃ und -OC₂H₅ besonders bevorzugt sind.

Beispiele für Reste R⁴ sind
-(CH₂)₃-, -(CH₂)₃-NHCH₂CH₂-, -(CH₂)₃-N[CH₂CH₂-]₂,
-(CH₂)₃-N-cyclohexyl-CH₂CH₂-, -(CH₂)₃-NHCH₂CH₂-NHCH₂CH₂-, 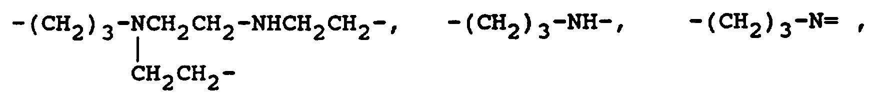 -(CH₂)₃-NMe-, -(CH₂)₃-NEt-, -(CH₂)₃-N-cyclohexyl-, 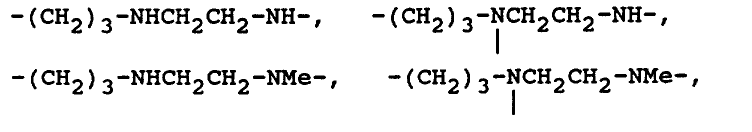 -(CH₂)₃-S-, -(CH₂)₃-NH₂⁺CH₂CH₂-, -(CH₂)₃-NH⁺[CH₂CH₂-]₂,
-(CH₂)₃-NH⁺-cyclohexyl-CH₂CH₂-, -(CH₂)₃-NH₂⁺CH₂CH₂-NHCH₂CH₂-, 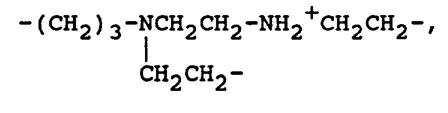 -(CH₂)₃-NH₂⁺-, -(CH₂)₃-NH⁺=, -(CH₂)₃-NH⁺Me-,
-(CH₂)₃-NH⁺Et-, -(CH₂)₃-NH⁺-cyclohexyl-, 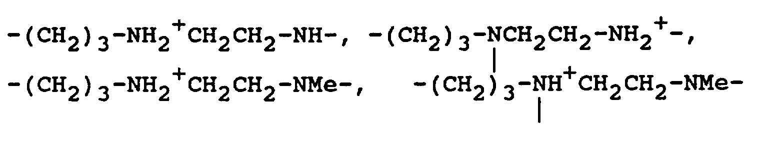 und 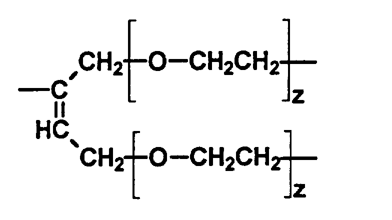 mit z gleich der obengenannten Bedeutung und Me gleich Methylrest sowie Et gleich Ethylrest.

Beispiele für den Rest R⁵ sind die für R'oben angegebenen linearen oder verzweigten Alkylenreste, wobei der Ethylen- und 1,2-Propylenrest bevorzugt und der Ethylenrest besonders bevorzugt sind.

Beispiele für den Rest R⁶ gleich Alkylenreste sind der Methylenrest, Ethylenrest, 1,3-Propylenrest, 2-Propylen-, 1,3-(2-Methylpropylen)-Rest, n-Butylenrest, 2-n-Butylen-, iso-Butylen-, n-Pentylen-, iso-Pentylen- und der n-Hexylenrest.

Bevorzugt handelt es sich bei Rest R⁶ um den Ethylenrest, den 1,3-Propylenrest, -(CH₃)₂C-CH₂- und Reste der Formel 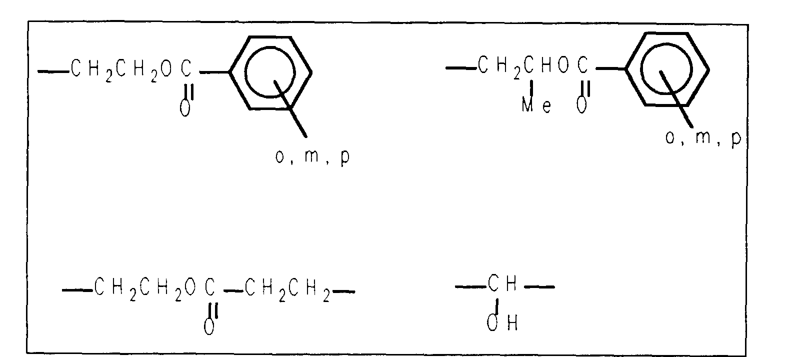 mit Me gleich Methylrest, wobei der -(Me)₂C-CH₂-Rest und Reste der Formeln 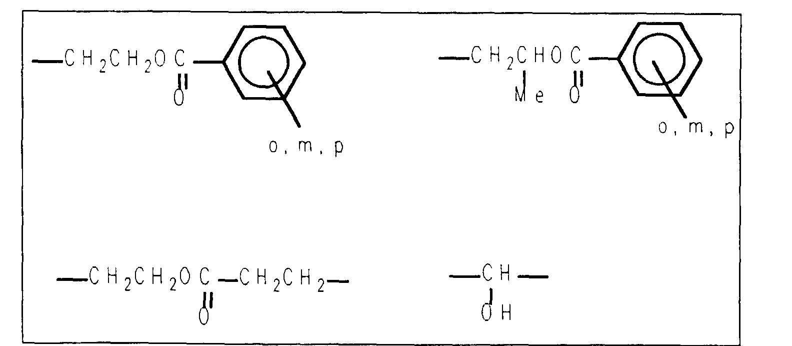 besonders bevorzugt sind.

Beispiele für den Rest Z sind das Sauerstoffatom und Reste der Formeln -NH-, -NCH₃-, -NCH₂CH₃-, -NCH₂CH₂CH₃-, wobei Sauerstoffatom und der Rest -NH- bevorzugt und der Rest -NH-besonders bevorzugt sind.

Beispiele für den Rest B sind z.B. 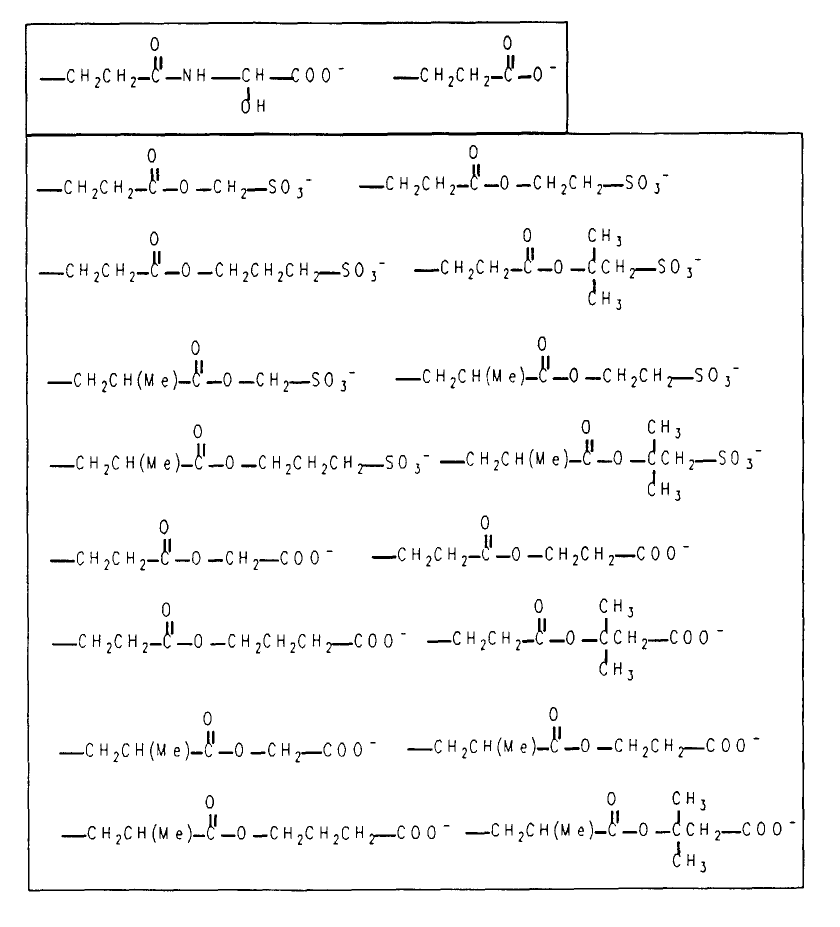 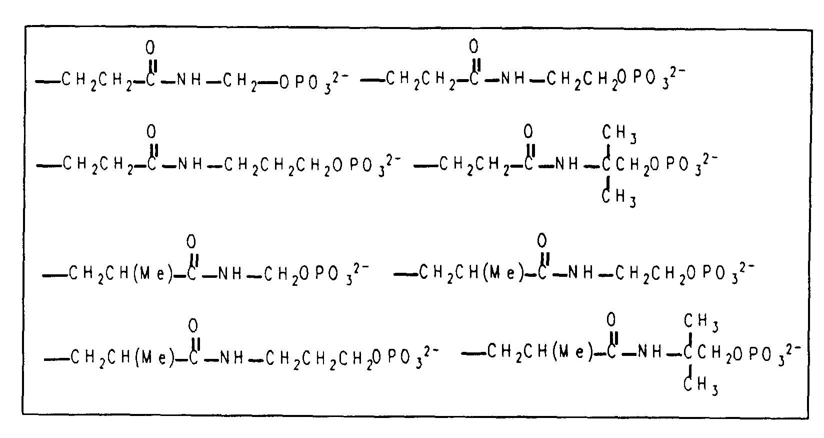 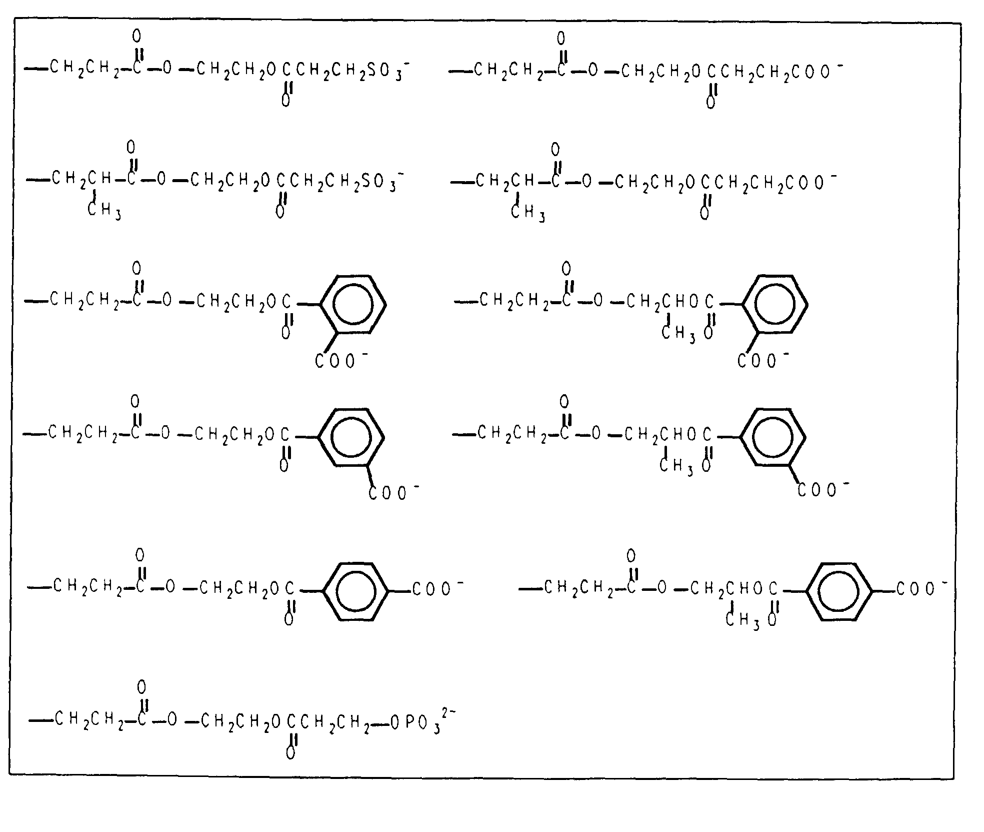 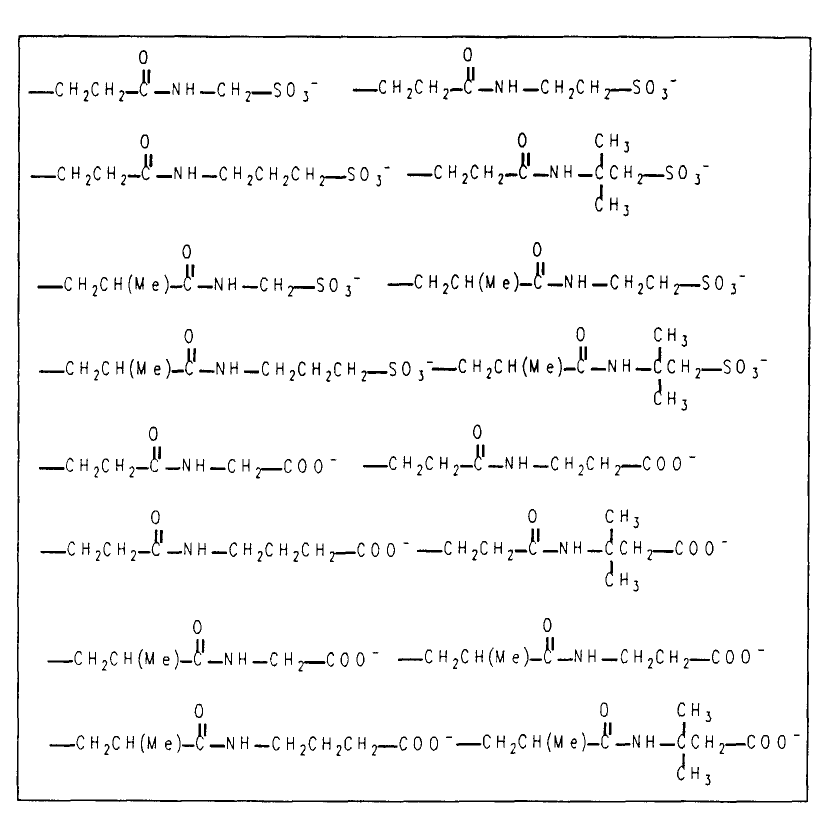 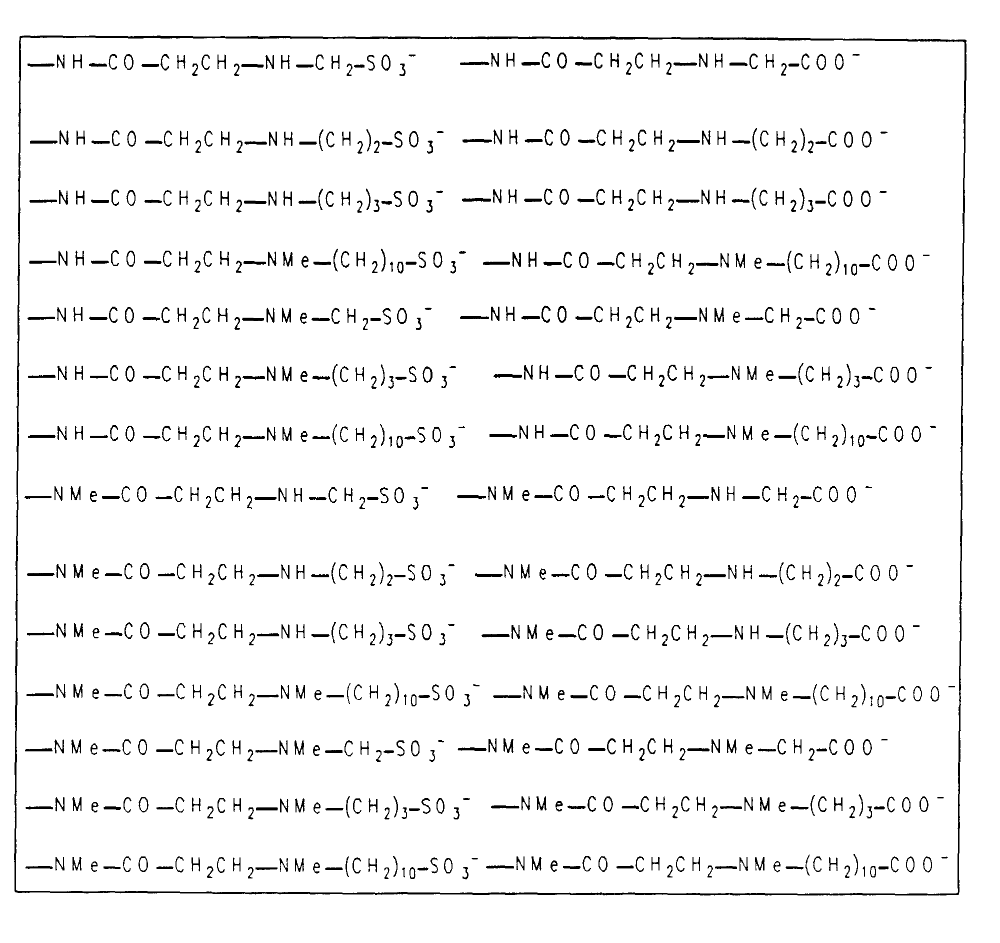 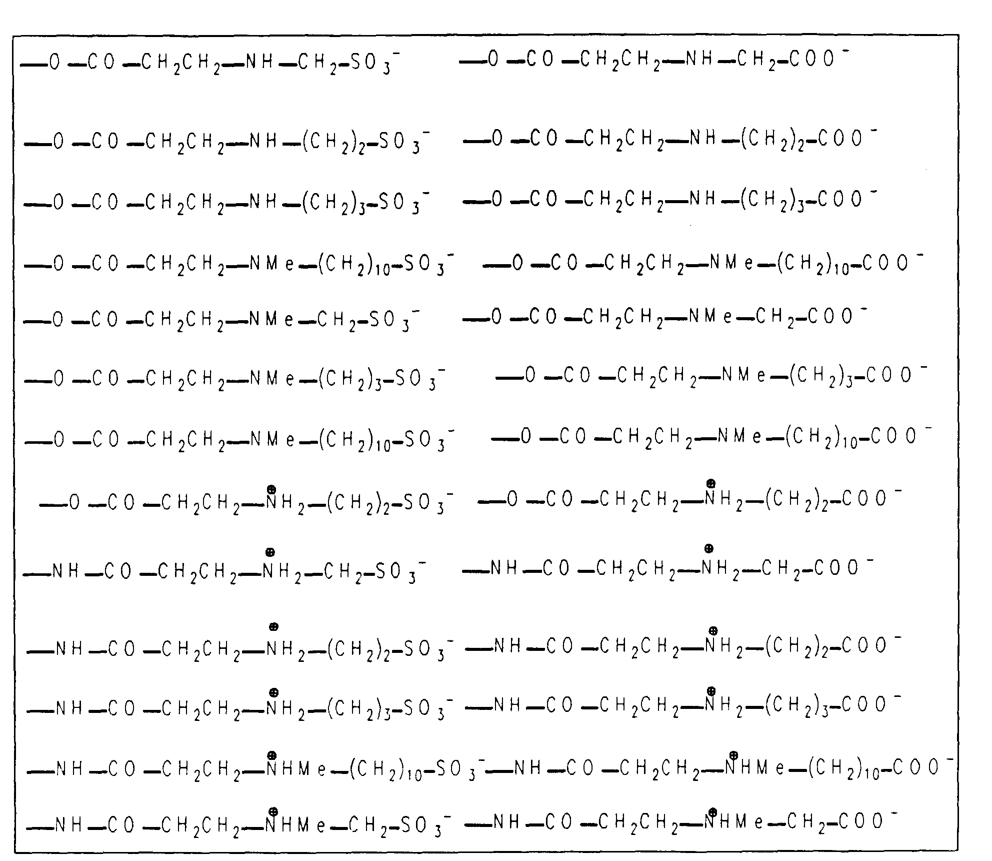 mit Me gleich Methylrest.

Beispiele für die erfindungsgemäßen ionischen Organosiliciumverbindungen sind solche, die aufgebaut sind
a) aus Me₃SiO_{1/2}-, Me₂SiO-,
   -OMeSi(CH₂)₃-N⁺H₂-(CH₂)₂-CO-NH-C(Me)₂-CH₂-SO₃⁻
b) aus Me₂SiO-,
   -_{1/2}OMe₂Si(CH₂)₃-N⁺H₂-(CH₂)₂-CO-NH-C(Me)₂-CH₂-SO₃⁻
c) aus Me₃SiO_{1/2}-, Me₂SiO-,
   -OMeSi(CH₂)₃N⁺Hcycl.Hex-(CH₂)₂-CONHC(Me)₂CH₂SO₃⁻
d) aus Me₂SiO-,
   -_{1/2}OMe₂Si(CH₂)₃N⁺Hcycl.Hex-(CH₂)₂-CONHC(Me)₂CH₂SO₃⁻
e) aus Me₃SiO_{1/2}-, Me₂SiO-,
   -OMeSi(CH₂)₃N⁺HMe-(CH₂)₂-CONHC(Me)₂CH₂SO₃⁻
f) aus Me₂SiO-, -_{1/2}OMe₂Si(CH₂)₃N⁺HMe-(CH₂)₂-CONHC(Me)₂CH₂SO₃⁻
g) aus Me₃SiO_{1/2}-, Me₂SiO-,
   -OMeSi(CH₂)₃-N⁺H₂-(CH₂)₂-CO-NH-CH₂-CH₂-SO₃⁻
h) aus Me₂SiO-,
   -_{1/2}OMe₂Si(CH₂)₃-N⁺H₂-(CH₂)₂-CO-NH-CH₂-CH₂-SO₃⁻
i) aus Me₃SiO_{1/2}-, Me₂SiO-,
   -OMeSi(CH₂)₃N⁺Hcycl.Hex-(CH₂)₂-CONHCH₂CH₂O₃⁻
j) aus Me₂SiO-,
   -_{1/2}OMe₂Si(CH₂)₃N⁺Hcycl.Hex-(CH₂)₂-CONHCH₂CH₂SO₃⁻
k) aus Me₃SiO_{1/2}-, Me₂SiO-,
   -OMeSi(CH₂)₃N⁺HMe-(CH₂)₂-CONHCH₂CH₂SO₃⁻
l) aus Me₂SiO-, -_{1/2}OMe₂Si(CH₂)₃N⁺HMe-(CH₂)₂-CONHCH₂CH₂SO₃⁻
m) aus Me₃SiO_{1/2}-, Me₂SiO-,
   -OMeSi(CH₂)₃N⁺H₂-(CH₂)₂-COOCH₂CH₂OOCCH₂CH₂-SO₃⁻
n) aus Me₂SiO-,
   -_{1/2}OMe₂Si(CH₂)₃N⁺H₂-(CH₂)₂-COOCH₂CH₂OOCCH₂CH₂-SO₃⁻
o) aus Me₃SiO_{1/2}-, Me₂SiO-,
   -OMeSi(CH₂)₃N⁺H₂-(CH₂)₂COOCH₂CH₂OOCCH₂CH₂-COO⁻
p) aus Me₂SiO-,
   -_{1/2}OMe₂Si(CH₂)₃N⁺H₂-(CH₂)₂-COOCH₂CH₂OOCCH₂CH₂-COO⁻
q) aus Me₃SiO_{1/2}-, Me₂SiO-,
   -OMeSi(CH₂)₃N⁺HMe-(CH₂)₂-COOCH₂CH₂OOCCH₂CH₂-SO₃⁻
r) aus Me₂SiO-,
   -_{1/2}OMe₂Si(CH₂)₃N⁺HMe-(CH₂)₂-COOCH₂CH₂OOCCH₂CH₂-SO₃⁻
s) aus Me₃SiO_{1/2}-, Me₂SiO-,
   -OMeSi(CH₂)₃N⁺HMe-(CH₂)₂-COOCH₂CH₂OOCCH₂CH₂-COO⁻
t) aus Me₂SiO-,
   -_{1/2}OMe₂Si(CH₂)₃N⁺HMe-(CH₂)₂-COOCH₂CH₂OOCCH₂CH₂-COO⁻
u) aus Me₃SiO_{1/2}-, Me₂SiO-,
   -OMeSi(CH₂)₃-N⁺H₂-(CH₂)₂-CO-NH-C(Me)₂-CH₂-OPO₃²⁻
v) aus Me₂SiO-,
   -_{1/2}OMe₂Si(CH₂)₃-N⁺H₂-(CH₂)₂-CO-NH-C(Me)₂-CH₂-OPO-₃²⁻
w) aus Me₃SiO_{1/2}-, Me₂SiO-,
   -OMeSi(CH₂)₃N⁺Hcycl.Hex-(CH₂)₂CONHC(Me)₂CH₂OPO₃²⁻
x) aus Me₂SiO-,
   -_{1/2}OMe₂Si(CH₂)₃N⁺Hcycl.Hex-(CH₂)₂-CONHC(Me)₂CH₂CPC₃²⁻
y) aus Me₃SiO_{1/2}-, Me₂SiO-,
   -OMeSi(CH₂)₃N⁺HMe-(CH₂)₂-CONHC(Me)₂CH₂OPO₃²⁻
z) aus Me₂SiO-,
   -_{1/2}OMe₂Si(CH₂)₃N⁺HMe-(CH₂)₂-CONHC(Me)₂CH₂OPO₃²⁻
1) aus Me₃SiO_{1/2}-, Me₂SiO-,
   -OMeSi(CH₂)₃-N⁺H₂-(CH₂)₂-CO-NH-CH₂-CH₂-OPO₃²⁻
2) aus Me₂SiO-,
   -_{1/2}OMe₂Si(CH₂)₃-N⁺H₂-(CH₂)₂-CO-NH-CH₂-CH₂-OPO₃²⁻
3) aus Me₃SiO_{1/2}-, Me₂SiO-,
   -OMeSi(CH₂)₃N⁺Hcycl.Hex-(CH₂)₂-CONHCH₂CH₂OPO₃²⁻
4) aus Me₂SiO-,
   -_{1/2}OMe₂Si(CH₂)₃N⁺Hcycl.Hex-(CH₂)-CONHCH₂CH₂OPO₃²⁻
5) aus Me₃SiO_{1/2}-, Me₂SiO-,
   -OMeSi(CH₂)₃N⁺HMe-(CH₂)₂-CONHCH₂CH₂OPO₃²⁻
6) aus Me₂SiO-, -_{1/2}OMe₂Si(CH₂)₃N⁺HMe-(CH₂)₂-CONHCH₂CH₂OPO₃²⁻
7) aus Me₃SiO_{1/2}-, Me₂SiO-,
   -OMeSi(CH₂)₃N⁺H₂-(CH₂)₂-COOCH₂CH₂OOC-o-C₆H₄-COO⁻
8 ) aus Me₂SiO-,
   -_{1/2}OMe₂Si(CH₂)₃N⁺H₂-(CH₂)₂-COOCH₂CH₂OOC-o-C₆H₄-COO⁻
9) aus Me₃SiO_{1/2}-, Me₂SiO-,
   -OMeSi(CH₂)₃N⁺H₂-(CH₂)₂-COOCH₂CH(Me)OOC-o-C₆H₄-COO⁻
10) aus Me₂SiO-,
   -_{1/2}OMe₂Si(CH₂)₃N⁺H₂-(CH₂)₂-COOCH₂CH(Me)OOC-o-C₆H₄-COO⁻
11) aus Me₃SiO_{1/2}-, Me₂SiO-,
   -OMeSi(CH₂)₃-NHCO-(CH₂)₂-N⁺H₂-(CH₂)₂-SO₃⁻
12) aus Me₂SiO-, -_{1/2}OMe₂Si(CH₂)₃-NHCO-(CH₂)₂-N⁺H₂-(CH₂)₂-SO₃⁻
13) aus Me₃SiO_{1/2}-, Me₂SiO-,
   -OMeSi(CH₂)₃-NHCO-(CH₂)₂-N⁺H₂-(CH₂)₂-COO⁻
14) aus Me₂SiO-, -_{1/2}OMe₂Si(CH₂)₃-NHCO-(CH₂)₂-N⁺H₂-(CH₂)₂-COO⁻
15) aus Me₃SiO_{1/2}-, Me₂SiO-,
   -OMeSi(CH₂)₃-N⁺H₂-(CH₂)₂-CO-NH-C(Me)₂-CH₂-SO₃⁻
   -OMeSi(CH₂)₃-N⁺H₃, -OMeSi(CH₂)₃-NH-(CH₂)₂-CO-NH-C(Me)₂-CH₂-SO₃⁻
16) aus Me₂SiO-,
   -_{1/2}OMe₂Si(CH₂)₃-N⁺H₂-(CH₂)₂-CO-NH-C(Me)₂-CH₂-SO₃⁻,
   -OMeSi(CH₂)₃-N⁺H₃
   -_{1/2}OMe₂Si(CH₂)₃-NH-(CH₂)₂-CO-NH-C(Me)₂-CH₂-SO₃⁻
17) aus Me₃SiO_{1/2}-, Me₂SiO-,
   -OMeSi(CH₂)₃N⁺Hcycl.Hex-(CH₂)₂-CONHC(Me)₂CH₂SO₃⁻,
   -OMeSi(CH₂)₃Ncycl.Hex-(CH₂)₂-CONHC(Me)₂CH₂SO₃⁻,
   -OMeSi(CH₂)₃NH₂⁺cycl.Hexyl
18) aus Me₃SiO_{1/2}-, Me₂SiO-,
   -OMeSi(CH₂)₃N⁺H₂-(CH₂)₂-COOCH₂CH₂OOCCH₂CH₂-COO⁻ ,
   -OMeSi(CH₂)₃NH-(CH₂)₂-COOCH₂CH₂OOCCH₂CH₂-COO⁻,
   -OMeSi(CH₂)₃NH₃⁺
19) aus Me₃SiO_{1/2}-, Me₂SiO-,
   -OMeSi(CH₂)₃-N⁺H₂-(CH₂)₂-CO-NH-C(Me)₂-CH₂-OPO₃²⁻
   -OMeSi(CH₂)₃-NH-(CH₂)₂-CO-NH-C(Me)₂-CH₂-OPO₃²⁻,
   -OMeSi(CH₂)₃-NH₃⁺
20) aus Me₃SiO_{1/2}-, Me₂SiO-,
   -OMeSi(CH₂)₃N⁺H₂-(CH₂)₂-COOCH₂CH₂OOC-o-C₆H₄-COO⁻
   -OMeSi(CH₂)₃NH-(CH₂)₂-COOCH₂CH₂OOC-o-C₆H₄-COO⁻,
   -OMeSi(CH₂)₃NH₃⁺
21) aus Me₃SiO_{1/2}-, Me₂SiO-,
   -OMeSi(CH₂)₃N⁺H₂-(CH₂)₂-COOCH₂CH(Me)OOC-o-C₆H₄-COO⁻
   -OMeSi(CH₂)₃NH-(CH₂)₂-COOCH₂CH(Me)OOC-o-C₆H₄-COO⁻,
   -OMeSi(CH₂)₃NH₃⁺
22) aus Me₃SiO_{1/2}-, Me₂SiO-,
   -OMeSi(CH₂)₃-NHCO-(CH₂)₂-N⁺H₂-(CH₂)₂-SO₃⁻
   -OMeSi(CH₂)₃-NHCO-(CH₂)₂-NH-(CH₂)₂-SO₃⁻, -OMeSi(CH₂)₃NH₃⁺ und
23) aus Me₃SiO_{1/2}-, Me₂SiO-,
   -OMeSi(CH₂)₃N⁺H₂-(CH₂)₂-NH-(CH₂)₂-COOCH₂CH(Me)OOC-o-C₆H₄-COO⁻
   -OMeSi(CH₂)₃NH-(CH₂)₂-NH-(CH₂)₂-COOCH₂CH(Me)OOC-o-C₆H₄-COO⁻,
   -OMeSi(CH₂)₃NH₃⁺, wobei Me gleich Methylrest und cycl.Hex gleich Cyclohexylrest bedeutet.

Die erfindungsgemäßen ionischen Organosiliciumverbindungen besitzen ein durchschnittliches Molekulargewicht Mₙ von vorzugsweise 500 bis 1 000 000 g/mol, besonders bevorzugt 1 000 bis 150 000 g/mol.

Die erfindungsgemäßen ionischen Organosiliciumverbindungen haben eine Viskosität von vorzugsweise 10 bis 1 000 000 mm²/s, besonders bevorzugt 20 bis 100 000 mm²/s jeweils bei 25°C.

Bevorzugt handelt es sich bei den erfindungsgemäßen ionischen Organosiliciumverbindungen um solche, die bestehen
a) aus Me₃SiO_{1/2}-, Me₂SiO-,
   -OMeSi(CH₂)₃-N⁺H₂-(CH₂)₂-CO-NH-C(Me)₂-CH₂-SO₃⁻
b) aus Me₂SiO-,
   -_{1/2}OMe₂Si(CH₂)₃-N⁺H₂-(CH₂)₂-CO-NH-C(Me)₂-CH₂-SO₃⁻
c) aus Me₃SiO_{1/2}-, Me₂SiO-,
   -OMeSi(CH₂)₃N⁺Hcycl.Hex-(CH₂)₂-CONHC(Me)₂CH₂SO₃⁻
d) aus Me₂SiO-,
   -_{1/2}OMe₂Si(CH₂)₃N⁺Hcycl.Hex-(CH₂)₂-CONHC(Me)₂CH₂SO₃⁻
e) aus Me₃SiO_{1/2}-, Me₂SiO-,
   -OMeSi(CH₂)₃N⁺HMe-(CH₂)₂-CONHC(Me)₂CH₂SO₃⁻
f) aus Me₃SiO_{1/2}-, Me₂SiO-,
   -OMeSi(CH₂)₃N⁺H₂-(CH₂)₂-COOCH₂CH₂OOCCH₂CH₂-COO⁻
g) aus Me₂SiO-,
   -_{1/2}OMe₂Si(CH₂)₃N⁺H₂-(CH₂)₂-COOCH₂CH₂OOCCH₂CH₂-COO⁻
h) aus Me₃SiO_{1/2}-, Me₂SiO-,
   -OMeSi(CH₂)₃N⁺HMe-(CH₂)₂-COOCH₂CH₂OOCCH₂CH₂-COO⁻
i) aus Me₂SiO-,
   -_{1/2}OMe₂Si(CH₂)₃N⁺HMe-(CH₂)₂-COOCH₂CH₂OOCCH₂CH₂-COO⁻
j) aus Me₃SiO_{1/2}-, Me₂SiO-,
   -OMeSi(CH₂)₃-N⁺H₂-(CH₂)₂-CO-NH-CH₂-CH₂-OPO₃²⁻
k) aus Me₂SiO-,
   -_{1/2}OMe₂Si(CH₂)₃-N⁺H₂-(CH₂)₂-CO-NH-CH₂-CH₂-OPO₃²⁻
l) aus Me₃Si_{1/2}-, Me₂SiO-,
   -OMeSi(CH₂)₃N⁺H₂-(CH₂)₂-COOCH₂CH₂OOC-o-C₆H₄-COO⁻
m) aus Me₂SiO-,
   -_{1/2}OMe₂Si(CH₂)₃N⁺H₂-(CH₂)₂-COOCH₂CH₂OOC-o-C₆H₄-COO⁻
n) aus Me₃SiO_{1/2}-, Me₂SiO-,
   -OMeSi(CH₂)₃N⁺H₂-(CH₂)₂-COOCH₂CH(Me)OOC-o-C₆H₄-COO⁻
o) aus Me₂SiO-,
   -_{1/2}OMe₂Si(CH₂)₃N⁺H₂-(CH₂)₂-COOCH₂CH(Me)OOC-o-C₆H₄-COO⁻
p) aus Me₃SiO_{1/2}-, Me₂SiO-,
   -OMeSi(CH₂)₃-NHCO-(CH₂)₂-N⁺H₂-(CH₂)₂-COO⁻
q) aus Me₂SiO-, -_{1/2}OMe₂Si(CH₂)₃-NHCO-(CH₂)₂-N⁺H₂-(CH₂)₂-COO⁻
r) aus Me₃SiO_{1/2}-, Me₂SiO-,
   -OMeSi(CH₂)₃-N⁺H₂-(CH₂)₂-CO-NH-C(Me)₂-CH₂-SO₃⁻
   -OMeSi(CH₂)₃-N⁺H₃, -OMeSi(CH₂)₃-NH-(CH₂)₂-CO-NH-C(Me)₂-CH₂-SO₃⁻
s) aus Me₂SiO-,
   -_{1/2}OMe₂Si(CH₂)₃-N⁺H₂-(CH₂)₂-CO-NH-C(Me)₂-CH₂-SO₃⁻,
   -OMeSi(CH₂)₃-N⁺H₃,
   -_{1/2}OMe₂Si(CH₂)₃-NH-(CH₂)₂-CO-NH-C(Me)₂-CH₂-SO₃⁻
t) aus Me₃SiO_{1/2}-, Me₂SiO-,
   -OMeSi(CH₂)₃N⁺H₂-(CH₂)₂-COOCH₂CH₂OOCCH₂CH₂-COO⁻ ,
   -OMeSi(CH₂)₃-NH-(CH₂)₂-COOCH₂CH₂OOCCH₂CH₂-COO⁻, -OMeSi(CH₂)₃NH₃⁺
u) aus Me₃SiO_{1/2}-, Me₂SiO-, -OMeSi(CH₂)₃-N⁺H₂-(CH₂)₂-CO-NH-C(Me)₂-CH₂-OPO₃²⁻
   -OMeSi(CH₂)₃-NH-(CH₂)₂-CO-NH-C(Me)₂-CH₂-OPO₃²⁻,
   -OMeSi(CH₂)₃-NH₃⁺
v) aus Me₃SiO_{1/2}-, Me₂SiO-,
   -OMeSi(CH₂)₃N⁺H₂-(CH₂)₂
   -COOCH₂CH₂OOC-o-C₆H₄-COO⁻
   -OMeSi(CH₂)₃NH-(CH₂)₂-COOCH₂CH₂OOC-o-C₆H₄-COO⁻,
   -OMeSi(CH₂)₃NH₃⁺
w) aus Me₃SiO_{1/2}-, Me₂SiO-,
   -OMeSi(CH₂)₃N⁺H₂-(CH₂)₂-COOCH₂CH(Me)OOC-o-C₆H₄-COO⁻
   -OMeSi(CH₂)₃NH-(CH₂)₂-COOCH₂CH(Me)OOC-o-C₆H₄-COO⁻,
   -OMeSi(CH₂)₃NH₃⁺ und
x) aus Me₃SiO_{1/2}-, Me₂SiO-,
   -OMeSi(CH₂)₃N⁺H₂-(CH₂)₂-NH-(CH₂)₂-COOCH₂CH(Me)OOC-o-C₆H₄-COO⁻
   -OMeSi(CH₂)₃NH-(CH₂)₂-NH-(CH₂)₂-COOCH₂CH(Me)OOC-o-C₆H₄-COO⁻,
   -OMeSi(CH₂)₃NH₃⁺, wobei Me gleich Methylrest und cycl.Hex
gleich Cyclohexylrest bedeutet.

Besonders bevorzugt handelt es sich bei den erfindungsgemäßen ionischen Organosiliciumverbindungen um solche, die bestehen
a) aus Me₃SiO_{1/2}-, Me₂SiO-,
   -OMeSi(CH₂)₃-N⁺H₂-(CH₂)₂-CO-NH-C(Me)₂-CH₂-SO₃⁻
b) aus Me₂SiO-,
   -_{1/2}OMe₂Si(CH₂)₃-N⁺H₂-(CH₂)₂-CO-NH-C(Me)₂-CH₂-SO₃⁻
c) aus Me₃SiO_{1/2}-, Me₂SiO-,
   -OMeSi(CH₂)₃N⁺H₂-(CH₂)₂-COOCH₂CH₂OOCCH₂CH₂-COO⁻
d) aus Me₂SiO-,
   -_{1/2}OMe₂Si(CH₂)₃N⁺H₂-(CH₂)₂-COOCH₂CH₂OOCCH₂CH₂-COO⁻
e) aus Me₃SiO_{1/2}-, Me₂SiO-,
   -OMeSi(CH₂)₃N⁺H₂-(CH₂)₂-COOCH₂CH₂OOC-o-C₆H₄-COO⁻
f) aus Me₂SiO-,
   -_{1/2}OMe₂Si(CH₂)₃N⁺H₂-(CH₂)₂-COOCH₂CH₂OOC-o-C₆H₄-COO⁻
g) aus Me₃SiO_{1/2}-, Me₂SiO-,
   -OMeSi(CH₂)₃-N⁺H₂-(CH₂)₂-CO-NH-C(Me)₂-CH₂-SO₃⁻
   -OMeSi(CH₂)₃-N⁺H₃, -OMeSi(CH₂)₃-NH-(CH₂)₂-CO-NH-C(Me)₂-CH₂-SO₃⁻
h) aus Me₂SiO-,
   -_{1/2}OMe₂Si(CH₂)₃-N⁺H₂-(CH₂)₂-CO-NH-C(Me)₂-CH₂-SO₃⁻,
   -OMeSi(CH₂)₃-N⁺H₃
   -_{1/2}OMe₂Si(CH₂)₃-NH-(CH₂)₂-CO-NH-C(Me)₂-CH₂-SO₃⁻
i) aus Me₃SiO_{1/2}-, Me₂SiO-,
   -OMeSi(CH₂)₃N⁺H₂-(CH₂)₂-COOCH₂CH₂OOCCH₂CH₂-COO⁻,
   -OMeSi(CH₂)₃NH-(CH₂)₂-COOCH₂CH₂OOCCH₂CH₂-COO⁻,
   -OMeSi(CH₂)₃NH₃⁺
j) aus Me₃SiO_{1/2}-, Me₂SiO-,
   -OMeSi(CH₂)₃N⁺H₂-(CH₂)₂-COOCH₂CH₂OOC-o-C₆H₄-COO⁻
   -OMeSi(CH₂)₃NH-(CH₂)₂-COOCH₂CH₂OOC-o-C₆H₄-COO⁻,
   -OMeSi(CH₂)₃NH₃⁺
k) aus Me₃SiO_{1/2}-, Me₂SiO-,
   -OMeSi(CH₂)₃N⁺H₂-(CH₂)₂-COOCH₂CH(Me)OOC-o-C₆H₄-COO⁻
   -OMeSi(CH₂)₃NH-(CH₂)₂-COOCH₂CH(Me)OOC-o-C₆H₄-COO⁻,
   -OMeSi(CH₂)₃NH₃⁺ und
l) aus Me₃SiO_{1/2}-, Me₂SiO-,
   -OMeSi(CH₂)₃N⁺H₂-(CH₂)₂-NH-(CH₂)₂-COOCH₂CH(Me)OOC-o-C₆H₄-COO⁻
   -OMeSi(CH₂)₃NH-(CH₂)₂-NH-(CH₂)₂-COOCH₂CH(Me)OOC-o-C₆H₄-COO⁻,
   -OMeSi(CH₂)₃NH₃⁺, wobei Me gleich Methylrest bedeutet.

Ein weiterer Gegenstand der Erfindung ist ein Verfahren zur Herstellung von ionischen Organosiliciumverbindungen, dadurch gekennzeichnet, daß Organosiliciumverbindungen enthaltend Einheiten der allgemeinen Formel

R_{g}X_{c}SiO_{(4-g-c)/2} (VIII),

wobei R, X und c die oben dafür angegebenen Bedeutungen haben und g 0, 1, 2 oder 3 ist,
mit der Maßgabe, daß die Summe g+c≤4 ist und die Organosiliciumverbindungen pro Molekül mindestens einen Rest R der Formeln (II), (III) oder (IV) aufweisen,
mit Verbindungen ausgewählt aus solchen der Formeln 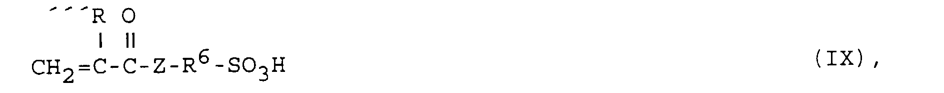 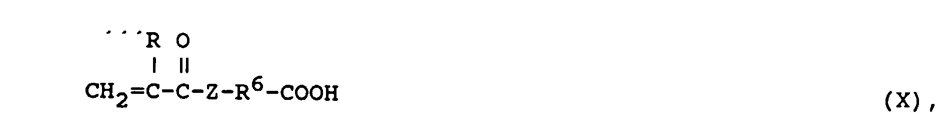 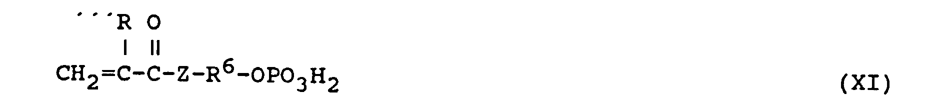 und 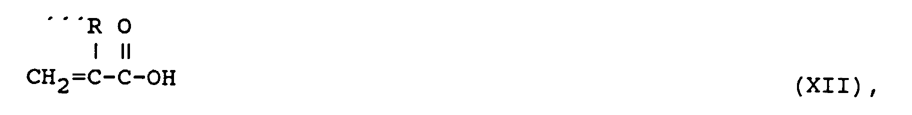 falls die eingesetzte Organosiliciumverbindung mindestens einen Rest R der Formel (II) oder (III) aufweist, oder mit Verbindungen ausgewählt aus solchen der Formeln

R"'NH-R⁵-SO₃H (XIII)

und

R"'NH-R⁵-COOH (XIV),

falls die eingesetzte Organosiliciumverbindung mindestens einen Rest R der Formel (IV) aufweist,
umgesetzt werden, wobei R⁵, R⁶, R"' und Z jeweils gleich oder verschieden sein können und eine der oben dafür angegebenen Bedeutungen haben.

Die erfindungsgemäße Umsetzung kann dabei in Substanz, Lösung oder Emulsion durchgeführt werden. Dabei können die eingesetzten Komponenten in beliebiger und an sich bekannter Art und Weise miteinander vermischt werden.

Bevorzugt handelt es sich bei den im erfindungsgemäßen Verfahren eingesetzten Organosiliciumverbindungen um solche, die aus Einheiten der Formel (VIII) bestehen.

Bei den erfindungsgemäß eingesetzten Organosiliciumverbindungen enthaltend Einheiten der Formel (VIII) kann es sich um beliebige Organosiliciumverbindungen, wie z.B. Organosilane sowie lineare, verzweigte und cyclische Organosiloxane, handeln, wobei Siloxane bevorzugt sind.

Die im erfindungsgemäßen Verfahren eingesetzten Organosiliciumverbindungen mit einem Rest der Formel (II) weisen eine Aminzahl (ml an 1n-HCl-Verbrauch für 1g Substanz) von vorzugsweise mindestens 0,003, besonders bevorzugt von 0,01 bis 6, auf. Entspricht der Rest R in den Einheiten der Formel (VIII) der Formel (III), so weisen vorzugsweise die erfindungsgemäß eingesetzten Organosiliciumverbindungen einen Mercaptogehalt von 0,1 bis 40 Gew.-% auf. Entspricht der Rest R in den Einheiten der Formel (VIII) der Formel (IV), so weisen bevorzugt die erfindungsgemäß eingesetzten Organosiliciumverbindungen einen Acrylgehalt (H₂C=CR'''C(O)Z-) von 0,1 bis 40 Gew.-% auf.

Die erfindungsgemäß eingesetzten Organosiliciumverbindungen weisen eine durchschnittliche Viskosität von vorzugsweise 5 bis 20 000 mm²/s, besonders bevorzugt 10 bis 5 000 mm²/s, insbesondere 10 bis 2000 mm²/s, jeweils bei 25°C auf.

Bei dem erfindungsgemäßen Verfahren werden als Organosiliciumverbindungen enthaltend Einheiten der Formel (VIII) bevorzugt solche der Formel

R₃SiO(SiR₂O)ᵣSiR₃ (XV)

verwendet, wobei
R gleich oder verschieden sein kann und die oben dafür angebene Bedeutung hat,
r 0 oder eine ganze Zahl von 1 bis 1500, bevorzugt 1 bis 500, ist, mit der Maßgabe, daß in Formel (XV) mindestens ein R einem Rest der Formel (II), (III) oder (IV) entspricht.

Beispiele für die im erfindungsgemäßen Verfahren eingesetzten Organosiliciumverbindungen sind
a) α,ω-Trimethyl-silyl-terminiertes Dimethyl-/Methyl-aminopropylsiloxan, α,ω-Dimethyl-aminopropyl-silyl-terminiertes Dimethylsiloxan, α,ω-Dimethyl-aminopropyl-silyl-terminiertes Dimethyl-/Methyl-aminopropyl-siloxan mit einer Aminzahl von 0,003 bis 6,
b) α,ω-Trimethylsilyl-terminiertes Dimethyl-/Methyl-aminoethylaminopropylsiloxan, α,ω-Dimethyl-aminoethylaminopropyl-silylterminiertes Dimethylsiloxan, α,ω-Dimethyl-aminoethylaminopropyl-silyl-terminiertes Dimethyl-/Methyl-aminoethylaminopropyl-siloxan mit einer Aminzahl von 0,003 bis 12,
c) α,ω-Trimethylsilyl-terminiertes Dimethyl-/Methyl-, N,N-Diethylaminoethylamino-propyl-siloxan, α,ω-Dimethyl-, N,N-Diethylaminoethylaminopropyl-silyl-terminiertes Dimethylsiloxan, α,ω-Dimethyl-, N,N-Diethylaminoethylaminopropyl-silyl-terminiertes Dimethyl-/Methyl-, N,N-Diethylaminoethylaminopropylsiloxan mit einer Aminzahl von 0,003 bis 12,
d) α,ω-Trimethylsilyl-terminiertes Dimethyl-/Methyl-, N,N-Dimethylaminopropylamino-propyl-siloxan, α,ω-Dimethyl-, N,N-Dimethylaminopropylaminopropyl-silyl-terminiertes Dimethylsiloxan, α,ω-Dimethyl-, N,N-Dimethylaminopropylaminopropyl-silylterminiertes Dimethyl-/Methyl-, N,N-Dimethylaminopropylaminopropyl-siloxan mit einer Aminzahl von 0,003 bis 12,
e) α,ω-Trimethylsilyl-terminiertes Dimethyl-/Methyl-, N-Cyclohexylaminopropyl-siloxan, α,ω-Dimethyl-, N-Cyclohexylaminopropyl-silyl-terminiertes Dimethylsiloxan, α,ω-Dimethyl-N-Cyclo- hexylaminopropyl-silyl-terminiertes Dimethyl-/Methyl, N-Cyclohexylaminopropyl-siloxan mit einer Aminzahl von 0,003 bis 12,
f) α,ω-Trimethylsilyl-terminiertes Dimethyl-/Methyl-Mercaptopropylsiloxan, α,ω-Dimethyl-Mercaptopropyl-silyl -terminiertes Dimethylsiloxan, α,ω-Dimethyl-mercaptopropyl-silyl-terminiertes Dimethyl-/Methyl-Mercaptopropyl-siloxan mit einem Mercaptohalt (Gew.-%SH) von 0,1 bis 40% und
g) α,ω-Trimethylsilyl-terminiertes Dimethyl-/Methyl-Acrylamidopropyl-siloxan, α,ω-Dimethyl-Acrylamidopropyl -silyl -terminiertes Dimethylsiloxan, α,ω-Dimethyl-Acrylamidopropyl-silylterminiertes Dimethyl-/Methyl-Acrylamidopropyl-siloxan mit einem Acrylamidogehalt (Gew.-% H₂C=CHCONH-) von 0,1 bis 40%.

Beispiele für die erfindungsgemäß eingesetzten Verbindungen der Formeln (IX) bis (XIV) sind
2-Acrylamido-2-methylpropansulfonsäure,
2-Acrylamido-propansulfonsäure, Acrylamido-propansulfonsäure,
2-Acryl(N-methyl)amido-2-methylpropansulfonsäure,
2-Acrylamido-2-methylpropancarbonsäure,
2-Acrylamido-propancarbonsäure, Acrylamido-propancarbonsäure,
2-Acryl(N-methyl)amido-2-methylpropancarbonsäure,
2-Acryloyloxyethyl-hydrogen-phthalat,
2-Acryloyloxypropyl-hydrogen-phthalat,
β-Acryloyloxyethyl-hydrogen-succinat,
2-Acrylamido-2-methylpropan-dihydrogenphosphat, Taurin,
3-Amino-propansulfonsäure, 2-Amino-ethancarbonsäure,
3-Amino-propancarbonsäure, Acryloyl-dihydrogenphosphat, Acrylsäure und Methacrylsäure.

Bevorzugt handelt es sich bei den erfindungsgemäß eingesetzten Verbindungen der Formeln (IX) bis (XIV) um
2-Acrylamido-2-methylpropansulfonsäure,
2-Acrylamido-propansulfonsäure,
2-Acryloyloxyethyl-hydrogen-phthalat,
2-Acryloyloxypropyl-hydrogen-phthalat,
β-Acryloyloxyethyl-hydrogen-succinat, wobei
2-Acrylamido-2-methylpropansulfonsäure,
2-Acryloyloxyethyl-hydrogen-phthalat,
2-Acryloyloxypropyl-hydrogen-phthalat und
β-Acryloyloxyethyl-hydrogen-succinat besonders bevorzugt sind.

Die erfindungsgemäß eingesetzten Organosiliciumverbindungen enthaltend Einheiten der Formel (VIII) sowie die Verbindungen der Formeln (IX) bis (XIV) sind handelsübliche Produkte bzw. nach in der Chemie bekannten Methoden herstellbar.

Bei dem erfindungsgemäßen Verfahren werden die erfindungsgemäß eingesetzten Acrylat-haltigen Verbindungen der Formeln (IX) bis (XII) vorzugsweise in Mengen von 0,001 bis 5 mol, besonders bevorzugt 0,01 bis 2 mol, je mol Amin-/Mercapto-Funktion gemäß Formel (II) oder (III) in der Organosiliciumverbindung vorliegen, insbesondere 0,1 bis 0,5 mol Verbindungen der Formeln (IX) bis (XII) je mol Amin-/Mercapto-Funktion gemäß Formel (II) und 0,1 bis 1,0 mol Verbindungen der Formeln (IX) bis (XII) je mol Amin-/Mercapto-Funktion gemäß Formel (III).

Bei dem erfindungsgemäßen Verfahren werden die erfindungsgemäß eingesetzten Amino-Säure-haltigen Verbindungen der Formeln (XIII) und (XIV) vorzugsweise in Mengen von 0,001 bis 5 mol, besonders bevorzugt 0,01 bis 2 mol, insbesondere 0,1 bis 1,0 mol, pro 1 mol Acrylfunktion gemäß Formel (IV) in der Organosiliciumverbindung vorliegen.

Bei dem erfindungsgemäßen Verfahren können alle bekannten Verbindungen, die Michaeladdition ähnliche Reaktionen katalysieren, eingesetzt werden, wie z.B. Metallverbindungen aus der Gruppe der Lewissäuren, organische oder anorganische Säuren und Basen, was nicht bevorzugt ist. Beispiele für solche Katalysatoren sind Verbindungen des Zinns, wie etwa das Zinn-(IV)-chlorid, des Aluminiums, wie Aluminium-(III)-chlorid, Essigsäure, Salzsäure, Schwefelsäure, Salpetersäure, (Erd-)Alkalihydroxide oder Amine, wie etwa Triethylamin.

Falls beim erfindungsgemäßen Verfahren Katalysator eingesetzt wird, handelt es sich um Mengen von vorzugsweise 0,01 bis 10 Gew.%, besonders bevorzugt um Mengen von 0,1 bis 5 Gew.%, jeweils bezogen auf das Gesamtgewicht der reaktiven Komponenten.

Des weiteren können bei dem erfindungsgemäßen Verfahren die Polymerisation verhindernde Stoffe, sog. Inhibitoren, eingesetzt werden. Bei den Inhibitoren kann es sich um beliebige Inhibitoren handeln, die auch bisher zur Unterdrückung der Polymerisation von Acrylaten eingesetzt werden konnten, wie beispielsweise Hydrochinonmono- methylether, Benzthiazin, Diphenylpicrylhydrazyl, Phenole oder Schwefelverbindungen.

Falls beim erfindungsgemäßen Verfahren Inhibitoren eingesetzt werden, handelt es sich um Mengen von vorzugsweise 0,000001 bis 1 Gew.%, besonders bevorzugt um Mengen von 0,0001 bis 0,1 Gew.%, jeweils bezogen auf Gesamtgewicht der reaktiven Komponenten.

Bei dem erfindungsgemäßen Verfahren können gegenüber den reaktiven Komponenten inerte organische Lösungsmittel mitverwendet werden. Beispiele für gegebenenfalls eingesetzte organische Lösungsmittel sind Methanol, Ethanol, Toluol, Xylol, Tetrahydrofuran, n-Butylacetat, Isopropanol, Isophoron, Octanisomere und Acetonitril. Falls Lösungsmittel eingesetzt werden, handelt es sich bevorzugt um Methanol, n-Butylacetat, Toluol und Isopropanol. Falls Lösungsmittel eingesetzt werden, handelt es sich um Mengen von vorzugsweise 1 bis 50 Gewichtsprozent, bezogen auf das Gesamtgewicht der reaktiven Komponenten.

Bei den im erfindungsgemäßen Verfahren eingesetzten Komponenten kann es sich jeweils um eine Art einer solchen Komponente oder um ein Gemisch aus mindestens zwei Arten einer jeweiligen Komponente handeln.

In einer bevorzugten Ausführungsform des erfindungsgemäßen Verfahrens werden Organosiliciumverbindungen aus Einheiten der Formel (VIII) mit Resten R der Formel (II) bzw. (IV) mit mindestens einer Verbindung der Formel (IX), (X) oder (XI) bzw. (XIII) umgesetzt.

In einer besonders bevorzugten Ausführungsform des erfindungsgemäßen Verfahrens werden Organosiliciumverbindungen aus Einheiten der Formel (VIII) mit Resten R der Formel (II) mit mindestens einer Verbindung der Formel (IX) oder (X) umgesetzt.

Das erfindungsgemäße Verfahren wird vorzugsweise beim Druck der umgebenden Atmosphäre, also zwischen 900 und 1100 hPa durchgeführt, es kann aber auch bei höheren oder niedrigeren Drücken durchgeführt werden. Ferner wird das erfindungsgemäße Verfahren vorzugsweise bei einer Temperatur von 0 bis 150°C, besonders bevorzugt 20 bis 100°C, durchgeführt.

Von den nach dem erfindungsgemäßen Verfahren hergestellten ionischen Organosilciumverbindungen wird überschüssige organische Verbindung der Formeln (IX) bis (XIV) vorzugsweise durch Extrahieren sowie gegebenenfalls mitverwendetes inertes organisches Lösungsmittel destillativ entfernt.

Das erfindungsgemäße Verfahren hat den Vorteil, daß es sehr einfach in der Durchführung ist und ein sehr hoher, vorzugsweise vollständiger, Umsatz erzielt wird.

Ferner hat das erfindungsgemäße Verfahren den Vorteil, daß die einzusetzenden Organosiliciumverbindungen bei relativ niedrigen Temperaturen, vorzugsweise 20 bis 60°C, in sehr kurzen Reaktionszeiten und ohne Verfärbung zu sehr klaren Produkten umgesetzt werden können und über das Ausmaß des Unterschusses an eingesetzter organischer Verbindung gezielt die Viskosität einstellbar ist.

Des weiteren hat das erfindungsgemäße Verfahren den Vorteil, daß die erfindungsgemäßen ionischen Organosiliciumverbindungen mit einer hohen Selektivität und unter Verwendung von in der Regel leicht zugänglichen Edukten hergestellt werden können.

Falls erwünscht, können die nach dem erfindungsgemäßen Verfahren erhaltenen ionischen Organosiliciumverbindungen mit Organopolysiloxanen (1), bevorzugt ausgewählt aus der Gruppe, bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten, equilibriert werden, wodurch beispielsweise die Einstellung des gewünschten Molekulargewichtes sowie die gezielte Verteilung der ionischen Gruppen im Molekül ermöglicht wird.

Im Rahmen der vorliegenden Erfindung sollen von dem Begriff Organopolysiloxane sowohl polymere, oligomere wie auch dimere Siloxane mitumfaßt werden.

Vorzugsweise werden als lineare, endständige Triorganosiloxygruppen aufweisende Organopolysiloxane solche der Formel

R⁷ ₃SiO(SiR⁷ ₂O)ᵤSiR⁷ ₃ (XVI),

als lineare, endständige Hydroxylgruppen aufweisende Organpolysiloxane solche der Formel

HO(SiR⁷ ₂O)ᵥH (XVII),

als cyclische Organopolysiloxane solche der Formel

(SiR⁷ ₂O)_{w} (XVIII)

und als Mischpolymerisate solche aus Einheiten der Formeln

R⁷ ₃SiO_{1/2}, R⁷ ₂SiO und R⁷SiO_{3/2}

verwendet, wobei R⁷ jeweils gleich oder verschieden sein kann und gegebenenfalls halogenierte Kohlenwasserstoffreste mit 1 bis 12 Kohlenstoffatomen bedeutet,
u 0 oder eine ganze Zahl im Wert von 1 bis 1500 ist,
v 0 oder eine ganze Zahl im Wert von 1 bis 1500 ist und
w eine ganze Zahl im Wert von 3 bis 12 ist.

Beispiele für Reste R⁷ sind die oben für R gleich gegebenenfalls halogenierte Kohlenwasserstoffreste angegebenen Beispiele, wobei Rest R⁷ gleich Alkylrest mit 1 bis 12 Kohlenstoffatomen bevorzugt ist.

Die Mengenverhältnisse der bei der gegebenenfalls durchgeführten Equilibrierung eingesetzten Organopolysiloxane (1) und der erfindungsgemäß hergestellten ionischen Organosiliciumverbindungen werden lediglich durch den gewünschten Anteil der ionischen Gruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden sauere oder basische Katalysatoren, welche die Equilibrierung fördern, eingesetzt, wobei basische Katalysatoren bevorzugt sind.

Beispiele für sauere Katalysatoren sind Schwefelsäure, Phosphorsäure, Trifluormethansulfonsäure, Phosphornitridchloride und unter den Reaktionsbedingungen feste, sauere Katalysatoren, wie säureaktivierte Bleicherde, sauere Zeolithe, sulfonierte Kohle und sulfonierte Styrol-Divinylbenzol-Mischpolymerisate, wobei als sauere Katalysatoren Phosphornitridchloride bevorzugt sind. Sauere Katalysatoren werden vorzugsweise in Mengen von 5 bis 1000 Gewichts-ppm(=Teile je Million), insbesondere 50 bis 200 Gewichts-ppm, jeweils bezogen auf das Gesamtgewicht der eingesetzten Organosiliciumverbindungen, verwendet.

Beispiele für basische Katalysatoren sind Benzyltrimethylammoniumhydroxid, Tetramethylammoniumhydroxid, Alkalihydroxid und Erdalkalihydroxid in methanolischer Lösung sowie Silanolate.

Bevorzugt sind Alkalihydroxide, welche in Mengen von 50 bis 10000 Gew.-ppm (Teile je Million), insbesondere 500 bis 2000 ppm, jeweils bezogen auf das Gesamtgewicht der eingesetzten Organosiliciumverbindungen, verwendet werden.

Die gegebenenfalls durchgeführte Equilibrierung wird vorzugsweise bei 80°C bis 150°C und beim Druck der umgebenden Atmosphäre, also etwa zwischen 900 und 1100 hPa durchgeführt. Es kann aber auch bei höheren oder niedrigeren Drücken durchgeführt werden.

Das Equilibrieren kann, falls erwünscht, in mit Wasser nicht mischbarem Lösungsmittel, wie Toluol, durchgeführt werden, was jedoch nicht bevorzugt ist. Falls solche organische Lösungsmittel jedoch eingesetzt werden, sind Mengen von 5 bis 20 Gew.%, bezogen auf das Gesamtgewicht der eingesetzten Organosiliciumverbindungen, bevorzugt.

Vor dem Aufarbeiten des bei dem Equilibrieren erhaltenen Gemisches kann der Katalysator unwirksam gemacht werden.

Die erfindungsgemäßen bzw. erfindungsgemäß hergestellten ionischen Organosiliciumverbindungen haben den Vorteil, daß sie geruchlos und bevorzugt wasserklar sind.

Ferner haben die erfindungsgemäßen bzw. erfindungsgemäß hergestellten ionischen Organosiliciumverbindungen den Vorteil, daß sie - z.B. in Form einer Emulsion - bei Verwendung in der Textilausrüstung neben sehr guten hydrophilen Eigenschaften und sehr guter Antistatik zu einem ausgezeichneten, flauschigen Weichgriff führen.

Des weiteren haben die erfindungsgemäßen bzw. erfindungsgemäß hergestellten ionischen Organosiliciumverbindungen den Vorteil, daß sie komplexierend auf Übergangsmetalle wirken und so beispielsweise in der Lederausrüstung (Chrom-gegerbt) dauerhaft anbinden und zu einer permanenten hydrophilen Ausrüstung mit erwünschtem Weichgriff führen.

Die erfindungsgemäßen bzw. erfindungsgemäß hergestellten ionischen Organosiliciumverbindungen können für alle Zwecke eingesetzt werden, für die auch bisher Organosiliciumverbindungen, insbesondere Aminogruppen aufweisende Organosiliciumverbindungen, verwendet wurden. Die erfindungsgemäßen bzw. erfindungsgemäß hergestellten ionischen Organosiliciumverbindungen eignen sich z.B. hervorragend für die Behandlung organischer Fasern, wie etwa als Fasergleitmittel und Spinnpräparation, sowie für Formulierungen im Polish-Bereich.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Als Jodzahl wird in den Beispielen die Zahl bezeichnet, welche die bei der Addition an die aliphatische Mehrfachbindung verbrauchte Jodmenge in Gramm pro 100 Gramm eingesetztes, zu untersuchendes Material angibt.

### Beispiel 1

20 g eines α,ω-Aminopropyl-dimethylterminierten Polydimethylsiloxans mit einer Aminzahl von 0,436 und einer Viskosität von 93 mm²/s werden in 20 g Isopropanol gelöst und auf 70°C erhitzt. 0,9 g (4.3 mmol) 2-Acrylamido-2-methyl-1-propansulfonsäure werden in 9 g Methanol gelöst und innerhalb von 10 Minuten der 70°C warmen Isopropanol/Siloxanlösung zugetropft. Nach weiteren 2 Stunden Reaktionszeit bei 70°C wird der Ansatz auf Raumtemperatur abgekühlt. Zum Schluß werden die Lösungsmittel mit Hilfe eines Rotationsverdampfers bei 50°C im ölpumpenvakuum bis zur Gewichtskonstanten abgezogen. Es werden 20,8 g eines klaren Öls mit einer Viskosität von 2784 mm²/s erhalten.

### Beispiel 2

20 g eines α,ω-Aminopropyl-dimethylterminierten Polydimethylsiloxans mit einer Aminzahl von 2,432 und einer Viskosität von 11,8 mm²/s werden in 20 g Isopropanol gelöst und auf 70°C erhitzt. 5 g 2-Acrylamido-2-methyl-1-propansulfonsäure (0,024 mol) werden in 50 g Methanol gelöst und innerhalb von 15 Minuten der 70°C warmen Isopropanol/Siloxanlösung zugetropft. Nach weiteren 2 Stunden Reaktionszeit bei 70°C wird der Ansatz auf Raumtemperatur abgekühlt. Zum Schluß werden die Lösungsmittel mit Hilfe eines Rotationsverdampfers bei 50°C im ölpumpenvakuum bis zur Gewichtskonstanten abgezogen. Es werden 25 g eines klaren, gelblichen Öls mit einer Viskosität von 34536 mm²/s erhalten.

### Beispiel 3

50 g eines α,ω-Trimethylterminierten Dimethyl-/Methyl-Aminopropyl-polysiloxans mit einer Aminzahl von 0,081 und einer Viskosität von 270 mm²/s werden in 25 g Isopropanol gelöst und auf 70°C erhitzt. 0,42 g 2-Acrylamido-2-methyl-1-propansulfonsäure (0,002 mol) werden in 4,2 g Methanol gelöst und innerhalb von 10 Minuten der 70°C warmen Isopropanol/Siloxanlösung zugetropft. Nach weiteren 2 Stunden Reaktionszeit bei 70°C wird der Ansatz auf Raumtemperatur abgekühlt. Zum Schluß werden die Lösungsmittel mit Hilfe eines Rotationsverdampfers bei 50°C im Ölpumpenvakuum bis zur Gewichtskonstanten abgezogen. Es werden 49,4 g eines klarens Öls mit einer Viskosität von 663 mm²/s erhalten.

### Beispiel 4

20 g eines α,ω-Methoxy-Dimethylterminierten Dimethyl-/Methyl-Aminopropyl-polysiloxans mit einer Aminzahl von 0,292 und einer Viskosität von 1002 mm²/s, 0,6 g 2-Acrylamido-2-methyl-1-propansulfonsäure (2,92 mmol), 0,412 g 1%ige Hydrochinonmonomethyletherlösung in Isopropanol (200 ppm Inhibitor) werden in 20 g Isopropanol gelöst und auf 70°C erhitzt. Nach 2 Stunden Reaktionszeit bei 70°C wird der Ansatz auf Raumtemperatur abgekühlt. Zum Schluß wird das Lösungsmittel mit Hilfe eines Rotationsverdampfers bei 50°C im ölpumpenvakuum bis zur Gewichtskonstanten abgezogen. Es werden 20,9 g eines klaren, leicht gelblichen Öls mit einer Viskosität von 50423 mm²/s erhalten.

### Beispiel 5

20 g eines α,ω-Trimethylterminierten Dimethyl-/Methyl-Aminopropyl-polysiloxans mit einer Aminzahl von 0,249 und einer Viskosität von 207 mm²/s, 0,52 g 2-Acrylamido-2-methyl-1-propansulfonsäure (2,5 mmol), 0,41 g 1%ige Hydrochinonmonomethyletherlösung in Isopropanol (200 ppm Inhibitor) werden in 20 g Isopropanol gelöst und auf 70°C erhitzt. Nach 2 Stunden Reaktionszeit bei 70°C wird der Ansatz auf Raumtemperatur abgekühlt. Zum Schluß wird das Lösungsmittel mit Hilfe eines Rotationsverdampfers bei 50°C im Ölpumpenvakuum bis zur Gewichtskonstanten abgezogen. Es werden 20,0 g eines klaren Öls mit einer Viskosität von 12474 mm²/s erhalten.

### Beispiel 6

20 g eines α,ω-Aminopropyl-dimethylterminierten Polydimethylsiloxans mit einer Aminzahl von 0,436 und einer Viskosität von 93 mm²/s und 0,9 g 2-Acrylamido-2-methyl-1-propansulfonsäure (43 mmol) werden in 20 g Isopropanol gelöst und auf 70°C erhitzt. Nach 2 Stunden Reaktionszeit bei 70°C wird der Ansatz auf Raumtemperatur abgekühlt. Zum Schluß wird das Lösungsmittel mit Hilfe eines Rotationsverdampfers bei 50°C im Ölpumpenvakuum bis zur Gewichtskonstanten abgezogen. Es werden 19,8 g eines klaren Öls mit einer Viskosität von 2777 mm²/s erhalten.

### Beispiel 7

20 g eines α,ω-Aminopropyl-dimethylterminierten Polydimethylsiloxans mit einer Aminzahl von 2,432 und einer Viskosität von 11,8 mm²/s und 5 g 2-Acrylamido-2-methyl-1-propansulfonsäure (0,024 mol) werden in 20 g Isopropanol gelöst und auf 70°C erhitzt. Nach 2 Stunden Reaktionszeit bei 70°C wird der Ansatz auf Raumtemperatur abgekühlt. Zum Schluß wird das Lösungsmittel mit Hilfe eines Rotationsverdampfers bei 50°C im Ölpumpenvakuum bis zur Gewichtskonstanten abgezogen. Es werden 24,3 g eines Öls mit einer Viskosität von 34529 mm²/s erhalten.

### Beispiel 8

20 g eines α,ω-Methoxy-Dimethylterminierten Dimethyl-/Methyl-Aminopropyl-polysiloxans mit einer Aminzahl von 0,292 und einer Viskosität von 1002 mm²/s, 0,12 g 2-Acrylamido-2-methyl-1-propansulfonsäure (0,58 mmol), 0,40 g 1%ige Hydrochinonmonomethyletherlösung in Isopropanol (200 ppm Inhibitor) werden in 20 g Isopropanol gelöst und auf 70°C erhitzt. Nach 2 Stunden Reaktionszeit bei 70°C wird der Ansatz auf Raumtemperatur abgekühlt. Zum Schluß wird das Lösungsmittel mit Hilfe eines Rotationsverdampfers bei 50°C im Ölpumpenvakuum bis zur Gewichtskonstanten abgezogen. Es werden 19,4 g eines klaren Öls mit einer Viskosität von 13093 mm²/s erhalten.

### Beispiel 9

20 g eines α,ω-Aminopropyl-dimethylterminierten Polydimethylsiloxans mit einer Aminzahl von 0,436 und einer Viskosität von 93 mm²/s werden in 20 g Isopropanol gelöst und auf 70°C erhitzt. Dazu wird eine Lösung aus 1,21 g 2-Acryloyloxypropyl-Hydrogenphthalat(4,36 mmol) und 5 g Isopropanol in 5 Minuten zudosiert. Nach 2 Stunden Reaktionszeit bei 70°C wird der Ansatz auf Raumtemperatur abgekühlt. Zum Schluß wird das Lösungsmittel mit Hilfe eines Rotationsverdampfers bei 50°C im Ölpumpenvakuum bis zur Gewichtskonstanten abgezogen. Es werden 21,1 g eines klaren Öls mit einer Viskosität von 2186 mm²/s erhalten.

### Beispiel 10

20 g eines α,ω-Aminopropyl-dimethylterminierten Polydimethylsiloxans mit einer Aminzahl von 0,436 und einer Viskosität von 93 mm²/s werden in 20 g Isopropanol gelöst und auf 70°C erhitzt. Dazu wird eine Lösung aus 0,94 g β-Acryloyloxyethylhydrogensuccinat (4,36 mmol) und 5 g Isopropanol in 5 Minuten zudosiert. Nach 2 Stunden Reaktionszeit bei 70°C wird der Ansatz auf Raumtemperatur abgekühlt. Zum Schluß wird das Lösungsmittel mit Hilfe eines Rotationsverdampfers bei 50°C im Ölpumpenvakuum bis zur Gewichtskonstanten abgezogen. Es werden 20,6 g eines klaren Öls mit einer Viskosität von 3619 mm²/s erhalten.

### Beispiel 11

40 g eines α,ω-Trimethylterminierten Dimethyl-/Methyl-Aminopropyl-polysiloxans mit einer Aminzahl von 0,249 und einer Viskosität von 207 mm²/s werden in 40 g Isopropanol gelöst und auf 70°C erhitzt. Dazu wird eine Lösung aus 1,08 g β-Acryloyloxyethylhydrogensuccinate (4,98 mmol) und 5 g Isopropanol in 5 Minuten zudosiert. Nach 2 Stunden Reaktionszeit bei 70°C wird der Ansatz auf Raumtemperatur abgekühlt. Zum Schluß wird das Lösungsmittel mit Hilfe eines Rotationsverdampfers bei 50°C im Ölpumpenvakuum bis zur Gewichtskonstanten abgezogen. Es werden 41,0 g eines klaren Öls mit einer Viskosität von 5773 mm²/s erhalten.

### Beispiel 12

40 g eines α,ω-Trimethylterminierten Dimethyl-/Methyl-Mercaptopropyl-polysiloxans mit einem Mercaptogehalt von 0,51% (Gewichtsprozent) und einer Viskosität von 114 mm²/s werden in 40 g Isopropanol gelöst und auf 70°C erhitzt. 0,9 g (4,3 mmol) 2-Acrylamido-2-methyl-1-propansulfonsäure werden in 9 g Methanol mit 0,8 g (4,3 mmol) Dodecylamin neutralisiert und innerhalb von 10 Minuten der 70°C warmen Isopropanol/Siloxanlösung zugetropft. Nach 2 Stunden Reaktionszeit wird der Ansatz auf Raumtemperatur abgekühlt. Zum Schluß wird das Lösungsmittel mit Hilfe eines Rotationsverdampfers bei 50°C im Ölpumpenvakuum bis zur Gewichtskonstanten abgezogen. Es werden 41,0 g eines klaren Öls mit einer Viskosität von 3216 mm²/s erhalten.

### Beispiel 13

100 g eines α,ω-Dimethyl-acrylatoalkenyl-terminierten Dimethylpolysiloxans mit einer Jodzahl von 12 und einer Viskosität von 421 mm²/s werden in 50 g Tetrahydrofuran gelöst und auf 60°C erhitzt. 5,9 g (47,3 mmol) Taurin in 10 g Methanol werden innerhalb von 15 Minuten der 60°C warmen Tetrahydrofuran/Siloxanlösung zugetropft. Nach 2 Stunden Reaktionszeit wird der Ansatz auf Raumtemperatur abgekühlt. Zum Schluß werden die Lösungsmittel mit Hilfe eines Rotationsverdampfers bei 50°C im Ölpumpenvakuum bis zur Gewichtskonstanten abgezogen. Es werden 103,9 g eines klaren Öls mit einer Viskosität von 5174 mm²/s erhalten.

### Beispiel 14

20 g eines α,ω-Aminopropyl-dimethylterminierten Polydimethylsiloxans mit einer Aminzahl von 0,436 und einer Viskosität von 93 mm²/s werden auf 70°C erhitzt. Dazu werden 0,94 g β-Acryloyloxyethylhydrogensuccinat (4,36 mmol) in 5 Minuten zudosiert. Nach 2 Stunden Reaktionszeit bei 70°C wird der Ansatz auf Raumtemperatur abgekühlt. Es werden 20,9 g eines klaren Öls mit einer Viskosität von 3814 mm²/s erhalten.

## Patentansprüche

1. Ionische Organosiliciumverbindungen enthaltend Siloxaneinheiten der Formel
AₐR_{b}X_{c}SiO_{(4-a-b-c)/2} (I),
wobei
R gleiche oder verschiedene, gegebenenfalls halogenierte Kohlenwasserstoffreste mit 1 bis 12 Kohlenstoffatomen oder Reste der Formeln
-R'-[[NHCH₂CH₂]ₒ-[N⁺H₂CH₂CH₂]ₚ-N^{(x+q-2)+}HₓR''_{q}]_{d-1} (II),
-R'-[SH]_{d-1} (III)
oder
-R'-[Z-C(O)-CR'''=CH₂]_{d-1} (IV)
bedeutet, worin
R' gleich oder verschieden sein kann und ein zwei-, drei- oder vierwertigen Kohlenwasserstoffrest mit 1 bis 60 Kohlenstoffatomen ist, der durch ein oder mehrere Sauerstoffatome unterbrochen sein kann,
R'' ein Wasserstoffatom oder ein Alkylrest mit 1 bis 8 Kohlenstoffatomen ist,
Z ein Sauerstoffatom oder einen Rest der Formel -NR"'-darstellt,
R"' ein Wasserstoffatom oder einen Methylrest bedeutet,
o 0 oder eine ganze Zahl von 1 bis 100,
p 0 oder eine ganze Zahl von 1 bis 100,
q 0, 1 oder 2,
x 0, 1 oder 2 und
d abhängig von der Wertigkeit von Rest R' 2, 3 oder 4 ist, mit der Maßgabe, daß in Formel (II) die Summe x+q gleich 2 oder 3 ist,
X gleich oder verschieden sein kann und ein Halogenatom oder einen Rest der Formel -OR¹ bedeutet mit R¹ gleich Alkylrest, der durch ein Sauerstoffatom unterbrochen sein kann, oder einen Rest der Formel
-R²-[[CH₂CH₂O]ₖ-[CH(CH₃)CH₂O]ₗ-[(CH₂)₄O]ₘ-R³]ₑ₋₁ (V)
bedeutet, worin
R² ein zwei-, drei- oder vierwertigen Kohlenwasserstoffrest mit 1 bis 60 Kohlenstoffatomen ist, der durch ein oder mehrere Sauerstoffatome unterbrochen sein kann und durch eine oder mehrere Gruppen der Formeln 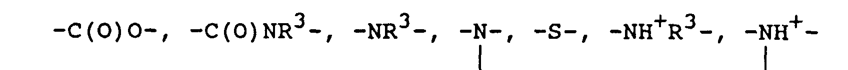 substituiert ist, worin
R³ ein Wasserstoffatom oder ein Kohlenwasserstoffrest mit 1 bis 30 Kohlenstoffatomen ist, der gegebenenfalls durch eine Gruppe der Formel -CO- unterbrochen sein kann,
k 0 oder eine ganze Zahl von 1 bis 100,
l 0 oder eine ganze Zahl von 1 bis 100,
m 0 oder eine ganze Zahl von 1 bis 100 ist und
e abhängig von der Wertigkeit von R² gleich 2, 3 oder 4 ist,
mit der Maßgabe, daß die Summe aus k+l+m ≥ 1 ist,
und A ein Rest der Formel
-R⁴-B_{(f-1)} (VI)
ist, worin
R⁴ eine der für R² oben angegebenen Bedeutungen hat,
f abhängig von der Wertigkeit von R⁴ 2, 3 oder 4 ist und
B einen Rest ausgewählt aus der Gruppe der allgemeinen Formeln 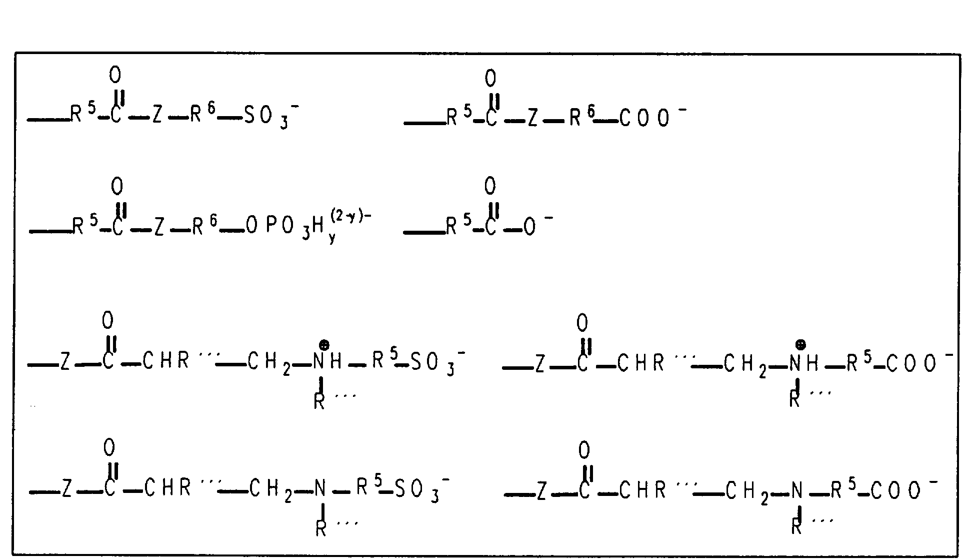 darstellt, worin
R⁵ gleich oder verschieden sein kann und einen zweiwertigen Kohlenwasserstoffrest mit 2 bis 18 Kohlenstoffatomen bedeutet,
R⁶ gleich oder verschieden sein kann und einen zweiwertigen Alkylenrest mit 1 bis 18 Kohlenwasserstoffatomen oder einen Rest aus der Gruppe der Formeln 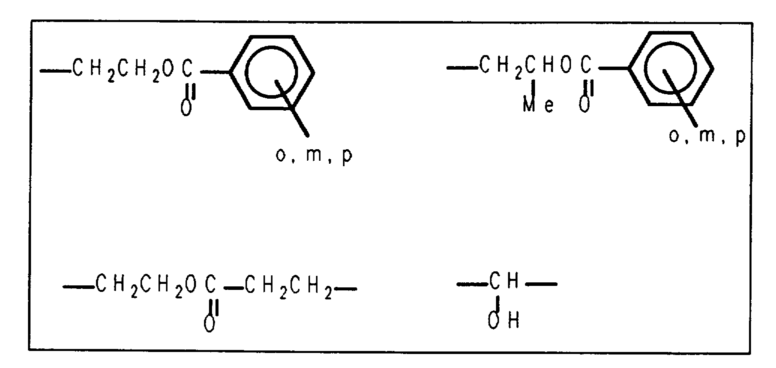 bedeutet mit Me gleich Methylrest,
Z und R"' jeweils eine der oben dafür angegebenen Bedeutungen haben und
y gleich 0 oder 1 ist,
a 0 oder 1 ist,
b 0, 1, 2 oder 3 ist,
c 0, 1, 2 oder 3 ist
und die Summe a+b+c ≤ 4 ist,
mit der Maßgabe, daß mindestens ein Rest A pro Molekül enthalten ist und gegebenenfalls zum Ausgleich der negativen Ladungen nicht gebundene Gegenionen aus der Gruppe der Alkali-, Erdalkali- oder Ammoniumionen organischer Amine sowie zum Ausgleich der positiven Ladungen nicht gebundene Gegenionen aus der Gruppe der organischen Anionen, wie z.B. Acetationen, vorhanden sind.

2. Organosiliciumverbindungen gemäß Anspruch 1, dadurch gekennzeichnet, daß sie ein durchschnittliches Molekulargewicht von 500 bis 1 000 000 g/mol besitzen.

3. Organosiliciumverbindungen gemäß Anspruch 1 oder 2, dadurch gekennzeichnet, daß sie eine Viskosität von 10 bis 1 000 000 mm²/s bei 25°C aufweisen.

4. Verfahren zur Herstellung von ionischen Organosiliciumverbindungen gemäß Anspruch 1, dadurch gekennzeichnet, daß Organosiliciumverbindungen enthaltend Einheiten der allgemeinen Formel
R_{g}X_{c}SiO_{(4-g-c)/2} (VIII),
wobei R, X und c die oben dafür angegebenen Bedeutungen haben und g 0, 1, 2 oder 3 ist,
mit der Maßgabe, daß die Summe g+c≤4 ist und die Organosiliciumverbindungen pro Molekül mindestens einen Rest R der Formeln (II), (III) oder (IV) aufweisen,
mit Verbindungen ausgewählt aus solchen der Formeln 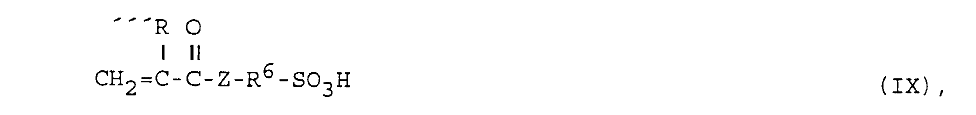 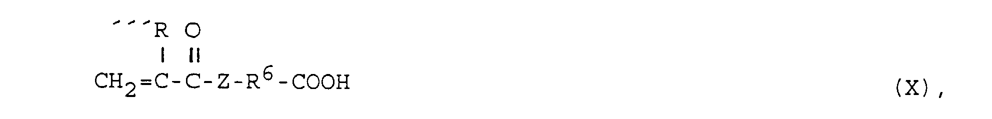 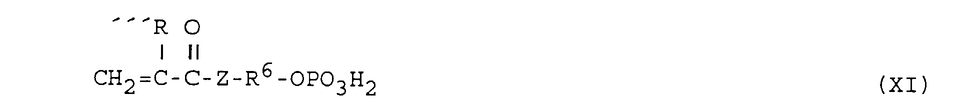 und 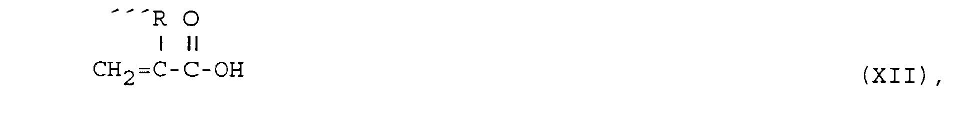 falls die eingesetzte Organosiliciumverbindung mindestens einen Rest R der Formel (II) oder (III) aufweist, oder mit Verbindungen ausgewählt aus solchen der Formeln
R'''NH-R⁵-SO₃H (XIII)
und
R'''NH-R⁵-COOH (XIV),
falls die eingesetzte Organosiliciumverbindung mindestens einen Rest R der Formel (IV) aufweist, umgesetzt werden, wobei R⁵, R⁶, R''' und Z jeweils gleich oder verschieden sein können und eine der oben dafür angegebenen Bedeutungen haben.

5. Verfahren gemäß Anspruch 4, dadurch gekennzeichnet, daß Organosiliciumverbindungen aus Einheiten der Formel (VIII) mit Resten R der Formel (II) bzw. (IV) mit mindestens einer Verbindung der Formel (IX) oder (X) bzw. (XIII) umgesetzt werden.

6. Verfahren gemäß Anspruch 4 oder 5, dadurch gekennzeichnet, daß Organosiliciumverbindungen aus Einheiten der Formel (VIII) mit Reste R der Formel (II) mit mindestens einer Verbindung der Formel (IX) oder (X) umgesetzt werden.

## Claims

1. Ionic organosilicon compounds comprising siloxane units of the formula
AₐR_{b}X_{c}SiO_{(4-a-b-c)/2} (I),
in which
R is identical or different, optionally halogenated hydrocarbon radicals having 1 to 12 carbon atoms or radicals of the formulae
-R'-[[NHCH₂CH₂]ₒ-[N⁺H₂CH₂CH₂]ₚ-N^{(x+q-2)+}HₓR''_{q}]_{d-1} (II),
-R'-[SH]_{d-1} (III)
or
-R'-[Z-C(O)-CR'''=CH₂]_{d-1} (IV)
in which
R' can be identical or different and is a di-, tri-, or tetravalent hydrocarbon radical having 1 to 60 carbon atoms, which can be interrupted by one or more oxygen atoms,
R'' is a hydrogen atom or an alkyl radical having 1 to 8 carbon atoms,
Z is an oxygen atom or a radical of the formula -NR"'-,
R"' is a hydrogen atom or a methyl radical,
o is 0 or an integer from 1 to 100,
p is 0 or an integer from 1 to 100,
q is 0, 1 or 2,
x is 0, 1 or 2 and
d is 2, 3 or 4, depending on the valency of R', with the proviso that in formula (II) the sum x+q is 2 or 3, X is identical or different and is a halogen atom or a radical of the formula -OR¹, where R¹ is an alkyl radical which can be interrupted by an oxygen atom, or a radical of the formula
-R²-[[CH₂CH₂O]ₖ-[CH(CH₃)CH₂O]ₗ-[(CH₂)₄O]ₘ-R³]ₑ₋₁ (V)
in which
R² is a di-, tri- or tetravalent hydrocarbon radical having 1 to 60 carbon atoms, which can be interrupted by one or more oxygen atoms and is substituted by one or more groups of the formulae 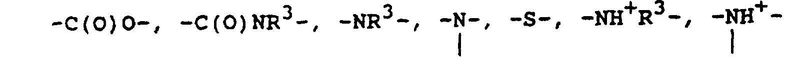 in which
R³ is a hydrogen atom or a hydrocarbon radical having 1 to 30 carbon atoms, which can optionally be interrupted by a group of formula -CO-,
k is 0 or an integer from 1 to 100,
l is 0 or an integer from 1 to 100,
m is 0 or an integer from 1 to 100 and
e is 2, 3 or 4, depending on the valency of R², with the proviso that the sum of k+l+m ≥ 1,
and A is a radical of the formula
**-R**^{**4**}**-B**_{**(f-1)**} **(VI)**
in which
R⁴ has one of the meanings given above for R²,
f is 2, 3 or 4, depending on the valency of R⁴, and
B is a radical chosen from the group consisting of the general formulae 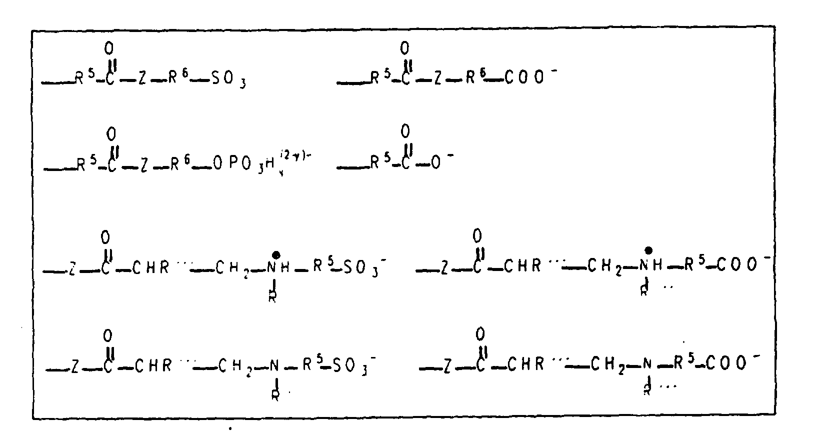
in which
R⁵ can be identical or different and is a divalent hydrocarbon radical having 2 to 18 carbon atoms,
R⁶ can be identical or different and is a divalent alkylene radical having 1 to 18 carbon atoms or a radical from the group consisting of the formulae 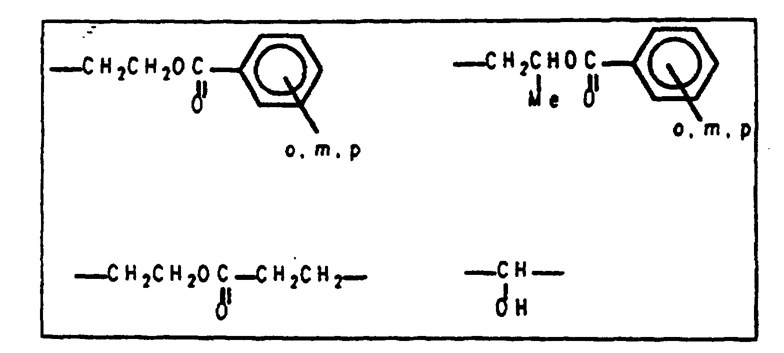 where Me is the methyl radical,
Z and R"' in each case have one of the meanings given above for these radicals and
y is 0 or 1,
a is 0 or 1,
b is 0, 1, 2 or 3,
c is 0, 1, 2 or 3
and the sum a+b+c is ≤ 4, with the proviso that at least one radical A is contained in each molecule, and, if appropriate, non-bonding counter-ions from the group consisting of alkali metal, alkaline earth metal and ammonium ions of organic amines are present for compensating the negative charges and non-bonded counter-ions from the group consisting of organic anions, such as, for example, acetate ions, are present for compensating the positive charges.

2. Organosilicon compounds according to Claim 1, which have an average molecular weight of 500 to 1,000,000 g/mol.

3. Organosilicon compounds according to Claim 1 or 2, which have viscosity of 10 to 1,000,000 mm²/s at 25°C.

4. Process for the preparation of ionic organosilicon compounds according to Claim 1, which comprises reacting organosilicon compounds comprising units of the general formula
R_{g}X_{c}SiO_{(4-g-c)}/2 (VIII),
in which R, X and c have the meanings given above for these symbols and g is 0, 1, 2 or 3, with the proviso that the sum g+c≤4 and the organosilicon compounds contain at least one radical R of the formulae (II), (III) or (IV) per molecule, with compounds chosen from those of the formulae 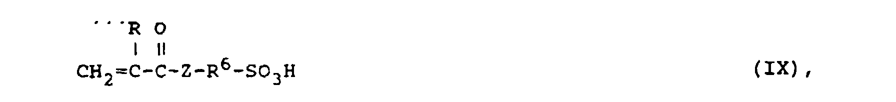 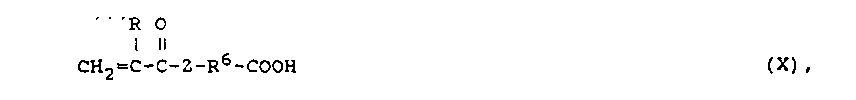 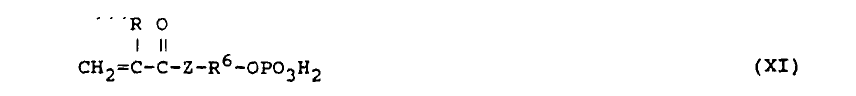 and 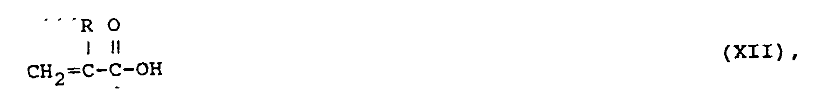 if the organosilicon compound employed contains at least one radical R of the formula (II) or (III), or with compounds chosen from those of the formulae
R"'NH-R⁵-SO₃H (XIII)
and
R"'NH-R⁵-COOH (XIV),
if the organosilicon compound employed contains at least one radical R of the formula (IV),
in which R⁵, R⁶, R"' and Z in each case can be identical or different and have one of the meanings given above for these radicals.

5. Process according to Claim 4, characterized in that organosilicon compounds comprising units of the formula (VIII) with radicals R of the formula (II) or (IV) are reacted with at least one compound of the formula (IX) or (X) or (XIII).

6. Process according to Claim 4 or 5, characterized in that organosilicon compounds comprising units of the formula (VIII) with radicals R of the formula (II) are reacted with at least one compound of the formula (IX) or (X).

## Revendications

1. Composés organosiliciés ioniques contenant des unités siloxane de formule
**A**_{**a**}**R**_{**b**}**X**_{**c**}**SiO**_{**(4-a-b-c)/2**} **(I),**
dans laquelle :
R signifie des radicaux hydrocarbonés identiques ou différents, le cas échéant halogénés, avec 1 à 12 atomes de carbone, ou des radicaux de formule
**-R'-[[NHCH**_{**2**}**CH**_{**2**}**]**_{**o**}**-[N**^{**+**}**H**_{**2**}**CH**_{**2**}**CH**_{**2**}**]**_{**p**}**-N**^{**(x+q-2)+**}**H**_{**x**}**R''**_{**q**}**]**_{**d-1**} **(II),**
**-R'-[SH]**_{**d-1**} **(III)**
ou
**-R'-[Z-C(O)-CR"'=CH**_{**2**}**]**_{**d-1**} **(IV),**
R' pouvant être identique ou différent et étant un radical hydrocarboné divalent, trivalent ou tétravalent avec 1 à 60 atomes de carbone, qui peut être interrompu par un ou plusieurs atomes d'oxygène;
R'' étant un atome d'hydrogène ou un radical alkyle avec 1 à 8 atomes de carbone;
Z représentant un atome d'oxygène ou un radical de formule -NR"'-;
R''' signifiant un atome d'hydrogène ou un radical méthyle;
o étant 0 ou un nombre entier de 1 à 100;
p étant 0 ou un nombre entier de 1 à 100;
q étant 0, 1 ou 2;
x étant 0, 1 ou 2, et
d étant 2, 3 ou 4 selon la valence du radical R', étant entendu que dans la formule (II) la somme x+q est égale à 2 ou 3;
X peut être identique ou différent et signifie un atome d'halogène ou un radical de formule -OR¹, R¹ étant un radical alkyle qui peut être interrompu par un atome d'oxygène, ou un radical de formule
-R²-[[CH₂CH₂O]ₖ-[CH(CH₃)CH₂O]ₗ-[(CH₂)₄O]ₘ-R³]ₑ₋₁ (V)
R² étant un radical hydrocarboné divalent, trivalent ou tétravalent avec 1 à 60 atomes de carbone, qui peut être interrompu par un ou plusieurs atomes d'oxygène et qui est substitué avec un ou plusieurs groupements de formules 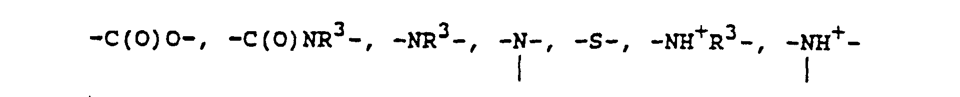
R³ étant un atome d'hydrogène ou un radical hydrocarboné avec 1 à 30 atomes de carbone, qui peut le cas échéant être interrompu par un groupement de formule -CO-;
k étant 0 ou un nombre entier de 1 à 100;
l étant 0 ou un nombre entier de 1 à 100;
m étant 0 ou un nombre entier de 1 à 100, et
e étant 2, 3 ou 4 selon la valence du radical R², étant entendu que la somme k+l+m ≥ 1,
et
A est un radical de formule
-R⁴-B_{(f-1)} (VI),
R⁴ ayant une des significations données ci-dessus pour R²;
f étant 2, 3 ou 4 selon la valence du radical R⁴, et
B représentant un radical choisi dans le groupe des formules générales 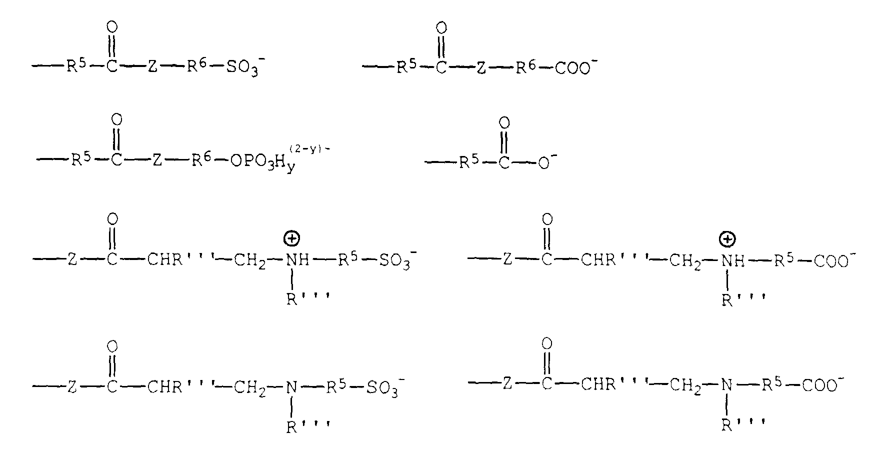 dans lesquelles
R⁵ peut être identique ou différent et signifie un radical hydrocarboné divalent avec 2 à 18 atomes de carbone;
R⁶ peut être identique ou différent et signifie un radical alkylène divalent avec 1 à 18 atomes de carbone ou un radical du groupe des formules 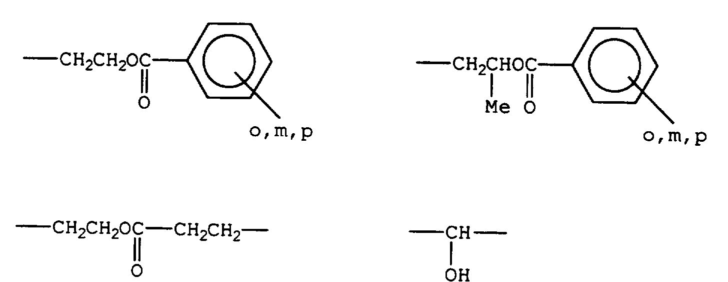 dans lesquelles
Me est un radical méthyle;
Z et R"' ont chacun une des significations données ci-dessus pour ceux-ci, et
y est 0 ou 1;
a est 0 ou 1;
b est 0, 1, 2 ou 3;
c est 0, 1, 2 ou 3, et
la somme a+b+c ≤ 4, étant entendu qu'il y a au moins un radical A par molécule et qu'il y a, le cas échéant, pour neutraliser les charges négatives, des contre-ions non liés du groupe des ions alcalins, alcalino-terreux ou ammonium d'amines organiques et, pour neutraliser les charges positives, des contre-ions non liés du groupe des anions organiques, comme par exemple des ions acétate.

2. Composés organosiliciés suivant la revendication 1, caractérisés en ce qu'ils ont un poids moléculaire moyen de 500 à 1 000 000 g/mole.

3. Composés organosiliciés suivant la revendication 1 ou 2, caractérisés en ce qu'ils présentent une viscosité de 10 à 1 000 000 mm²/s à 25°C.

4. Procédé de préparation de composés organosiliciés ioniques suivant la revendication 1, caractérisé en ce que l'on fait réagir des composés organosiliciés contenant des unités de formule générale
R_{g}X_{c}SiO_{(4-g-c)/2} (VIII),
dans laquelle
R, X et c ont les significations données ci-dessus pour ceux-ci et g est 0, 1, 2 ou 3,
étant entendu que la somme g+c ≤ 4 et que les composés organosiliciés présentent par molécule au moins un radical R de formules (II), (III) ou (IV),
avec des composés choisis parmi ceux qui ont les formules 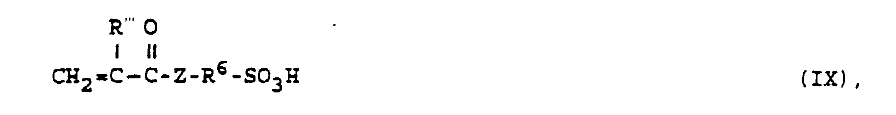 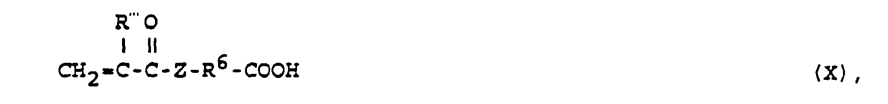 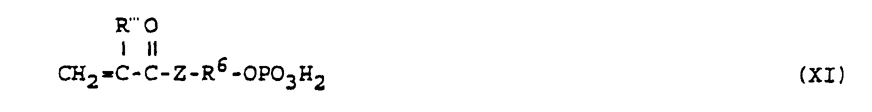 et 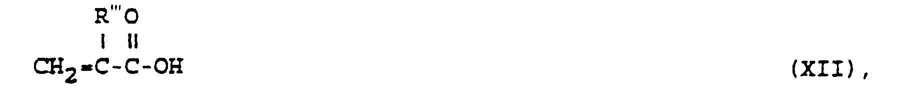 si le composé organosilicié utilisé présente au moins un radical R de formule (II) ou (III), ou
avec des composés choisis parmi ceux qui ont les formules
R"'NH-R⁵-SO₃H (XIII)
et
R'''NH-R⁵-COOH (XIV)
si le composé organosilicié utilisé présente au moins un radical R de formule (IV),
R⁵, R⁶, R"' et Z pouvant chacun être identiques ou différents et ayant les significations données ci-dessus pour ceux-ci.

5. Procédé suivant la revendication 4, caractérisé en ce que l'on fait réagir des composés organosiliciés faits d'unités de formule (VIII) avec des radicaux R de formule (II) ou selon le cas (IV) avec au moins un composé de formule (IX) ou (X) ou selon le cas (XIII).

6. Procédé suivant la revendication 4 ou 5, caractérisé en ce que l'on fait réagir des composés organosiliciés faits d'unités de formule (VIII) avec des radicaux de formule (II) avec au moins un composé de formule (IX) ou (X).
